# EUROPÄISCHE PATENTSCHRIFT

(11) **EP 0 751 179 B1**
(45) Veröffentlichungstag und Bekanntmachung des Hinweises auf die Patenterteilung: **07.06.2006**
(21) Anmeldenummer: 96810408.3
(22) Anmeldetag: 19.06.1996
(51) Int. Cl.: C08K 13/02, C08K 3/00, C08K 5/04

(54) **Antistatisch-ausgerüstete halogenhaltige Polymere**
Antistatically equipped halogen-containing polymers
Polymères halogénés antistatiques

(30) Priorität: 28.06.1995 CH 190095
(43) Veröffentlichungstag der Anmeldung: 02.01.1997
(73) Patentinhaber: Crompton Vinyl Additives GmbH, 68623 Lampertheim (DE)
(72) Erfinder: Hilti, Bruno, Dr., 4054 Basel (CH); Minder, Ernst, 4450, Sissbach (CH); Pfeiffer, Jürgen, 4153 Reinach (CH); Drewes, Rolf, Dr., 64678 Lindenfels (DE)

(56) Entgegenhaltungen:
- WO-A-86/01521
- DATABASE WPI Derwent Publications Ltd., London, GB; AN 89-147435 XP002013621 & JP-A-01 090 242 (SEKISUI CHEM IND KK) , 6.April 1989
- DATABASE WPI Derwent Publications Ltd., London, GB; AN 87-002622 XP002013622 & JP-A-61 261 359 (JAPAN SYNTHETIC RUBBER) , 19.November 1986

## Beschreibung

Die Erfindung betrifft antistatisch-ausgerüstete halogenhaltige Polymere, vorzugsweise Polyvinylchlorid (PVC), eine Additivmischung, enthaltend ein Polyoxyalkylen und ein anorganisches Salz, und ein Verfahren zur Herstellung von antistatischen halogenhaltigen Polymeren.

Ein Nachteil vieler Polymere und damit auch halogenhaltiger Polymere liegt in ihrer starken elektrostatischen Aufladbarkeit; einmal aufgebrachte Ladungen können wegen der geringen Leitfähigkeit nicht rasch genug abgeführt werden. Neben ästhetischen Gründen erfordern jedoch vielfach Sicherheitsaspekte einen raschen Ladungsabfluss. An Belästigungen und Gefahren lassen sich nennen: Verschmutzung von Polymeroberflächen, Aufladung von Personen bei Kontakt mit Polymeren, Produktionsstörungen durch Verkleben von Folienbahnen, Klumpenbildung bei Polymerpulvern und Funkenbildung durch starke Aufladungen mit nachfolgender Zündung von Staub- oder Lösungsmittel/Luft-Gemischen, was immer wieder zu schweren Explosionen führt.

Häufig werden gegen statische Aufladung Stoffe eingesetzt, welche die Oberflächenleitfähigkeit verbessern. Diese Stoffe haben jedoch den Nachteil, dass sie bei geringer Luftfeuchtigkeit praktisch unwirksam sind, weshalb man dann zu Stoffen greift, welche die Volumenleitfähigkeit erhöhen. Die bekannten Stoffe zur Erhöhung der Volumenleitfähigkeit, beispielsweise Russ oder Metallpulver, setzten jedoch die mechanischen Eigenschaften der Polymere herab und sind für transparente Polymere nicht anwendbar. Hinzu kommt immer häufiger die Forderung, dass Additive ökologisch unbedenklich sein sollen.

Weitere Ausführungen zu antistatischen Additiven und dem Mechanismus der statischen Aufladung finden sich beispielsweise im "Plastics Additives Handbook", Herausgeber R. Gächter und H. Müller, Hanser Verlag, 3. Auflage, 1990, Seiten 749-775.

Es besteht also weiterhin das Bedürfnis ein antistatisch wirkendes Additivsystem zur Verfügung zu haben, das gleichzeitig eine hohe Thermostabilisierung ermöglicht. Insbesondere sind ökologisch unbedenkliche Additivsysteme erwünscht, welche auch bei geringer Luftfeuchtigkeit wirksam sind und somit vorallem die Volumenleitfähigkeit des Polymeren erhöhen.

Es wurde nun gefunden, dass gewisse Polyoxyalkylene in Kombination mit einem ausgewählten anorganischen Salz einem halogenhaltigen Polymer eine hervorragende antistatische Wirkung bei guter Thermostabilität verleihen.

Gegenstand der Erfindung ist somit eine Zusammensetzung enthaltend
(a) ein halogenhaltiges Polymer,
(b) ein Polyoxyalkylen der Formel

   R₁-O-[CH(R₃)-CH₂-O-]ₙ-[CH₂[CH(OH)]ₚ-CH₂-O]_{q}-[C(O)]ᵣ-R₂ (I),

   wobei
   R₁ H, C₁-C₂₄-Alkyl, C₂-C₂₄-Alkenyl, CH₂=CH-C(O) oder CH₂=CCH₃-C(O),
   R₂ C₁-C₂₄-Alkyl, C₂-C₂₄-Alkenyl, CH₂-COOH,
   R₃ H oder CH₃,
   n eine Zahl grösser oder gleich 2,
   p eine Zahl von 1 bis 6, und
   q und r, unabhängig voneinander, 0 oder 1 ist;
und (c) ein anorganisches Salz der Formel {M^{z+}ₐA^{(az/b)-}_{b}} wobei
   M ein z-wertiges Alkalimetall-, Erdalkalimetall- oder Zinkkation,
   a und b, unabhängig voneinander, eine Zahl zwischen 1 und 6, und
   A ein Anion einer anorganischen Protonensäure oder einer organischen Sauerstoffsäure des Schwefels ist;
wobei die Zusammensetzung kein Ammoniucnperchlorat enthält.

Als halogenhaltige Polymere sind chlorhaltige bevorzugt, beispielsweise: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylniethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrytsäure und der alpha-substituierten Acrylsäure; Polymere von chlorierten Styrolen, zum Beispiel Dichlorstyrol; chlorierte Gummis; chlorierte Polymere des Ethylens; Polyvinyldichlorid; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Femer sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Im Rahmen dieser Erfindung sind unter PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Die erfindungsgemäss als Komponente (b) verwendbaren Polyoxyalkylene der Formel R₁-O-[CH(R₃)-CH₂-O-]ₙ-[CH₂-[CH(OH)]ₚ-CH₂-O]_{q}-[C(O)]ᵣ-R₂ (I), wobei
R₁ H, C₁-C₂₄-Alkyl, C₂-C₂₄-Alkenyl, CH₂=CH-C(O) oder CH₂=CCH₃-C(O),
R₂ C₁-C₂₄-Alkyl, C₂-C₂₄-Alkenyl, CH₂-COOH, R₃ H oder CH₃,
n eine Zahl grösser oder gleich 2,
p eine Zahl von 1 bis 6, und
q und r, unabhängig voneinander, 0 oder 1 ist
sind allgemein bekannt.

Bedeuten Substituenten in den Verbindungen der Formel (I) Alkyl mit 1 bis 24 Kohlenstoffatomen, so kommen hierfür Reste wie Methyl, Ethyl, Propyl, Butyl, Pentyl Hexyl, Heptyl, Octyl, Nonyl, Decyl, Undecyl, Dodecyl, Tetradecyl, Hexadecyl, Octadecyl, Eicosyl, Docosyl und Tetracosyl sowie entsprechende verzweigte Isomeren in Frage.

Bedeuten Substituenten in den Verbindungen der Formel (I) Alkenyl mit 1 bis 24 Kohlenstoffatomen, so leiten sich diese Reste von den genannten Alkylresten ab, wobei bevorzugt die Doppelbindung in der Mitte der Kohlenwasserstoffkette angeordnet ist. Besonders bevorzugt ist als Alkenylrest Oleyl. Wenn r 1 ist bedeutet R₂ als Alkenyl bevorzugt auch CH₂=CH- oder CH₂=CCH₃-.

In den Verbindungen der Formel (I) bedeutet R₁ bevorzugt H oder C₁-C₄-Alkyl und ganz besonders bevorzugt H.

In den Verbindungen der Formel (I) bedeutet R₂ bevorzugt C₆-C₂₀-Alkyl, C₆-C₂₀-Alkenyl oder N(C₁-C₈-Alkyl)₃Cl und ganz besonders bevorzugt C₆-C₂₀-Alkyl oder C₆-C₂₀-Alkenyl.

In den Verbindungen der Formel (I) bedeutet n bevorzugt eine Zahl zwischen 2 und 20 und ganz besonders bevorzugt eine Zahl zwischen 2 und 14.

In den Verbindungen der Formel (I) bedeutet p bevorzugt eine Zahl zwischen 2 und 6 und ganz besonders bevorzugt die Zahl 4.

In den Verbindungen der Formel (I) bedeutet q bevorzugt die Zahl 0 oder 1 und r die Zahl 1 und ganz besonders bevorzugt bedeutet q die Zahl 0 und r die Zahl 1.

Besonders bevorzugt sind Polypropylenglykollaurylester, Polypropylenglykololeylester, Polypropylenglykolmethyldiethylammoniumchlorid, Polyethylenglykolmonomethylether, Polyethylenglykoldimethylether, Polyethylenglykollaurylester, Polyethylenglykololeylester, Polyethylenglykololeylether, Polyethylenglykolsorbitanmonolaurylester, Polyethylenglykolstearylester, Polyethylenglykolpolypropylengiykollaurylether und Polyethylenglykollaurylethercarbonsäure. Ganz besonders bevorzugt sind Polyethylenglykotoleylether und speziell Polyethylenglykollaurylester.

Ganz besonders bevorzugt sind Verbindungen der Formel (I), worin R₁ H, R₂ C₆-C₂₀-Alkyl oder C₆-C₂₀-Alkenyl, R₃ H oder CH₃, n eine Zahl zwischen 2 und 14, q null und r eins ist.

Die erfindungsgemäss als Komponente (b) verwendbare Verbindung der Formel (I) kann in einer Menge von beispielsweise 0,1 bis 50, zweckmässig 0, I bis 30, besonders bevorzugt 0,1 bis 20 Gew.-Teilen, bezogen auf 100 Gew.-Teile halogenhaltiges Polymer, eingesetzt werden.

Die erfindungsgemäss als Komponente (c) verwendbaren anorganischen Salze der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist,
sind allgemein bekannt.

M leitet sich als Alkalimetall-, Erdalkalimetall- oder Zinkkation bevorzugt von den Metallen Li, Na, K, Cs, Ca, Mg, Sr, Ba und Zn ab. Insbesondere leitet sich M von den Metallen Li, Na, K, Ca, Mg und Zn ab.

A ist das Anion einer anorganischen Protonensäure oder einer organischen Sauerstoffsäure des Schwefels, wobei auch Säuren umfasst sind, welche in freier Form nicht existent sind, sondern nur in Form ihrer Salze existieren. A leitet sich bevorzugt von Säuren aus der Gruppe der anorganischen Sauerstoffsäuren, der anorganischen Komplexsäuren und der organischen Sauerstoffsäuren des Schwefels ab. Beispielhaft sind die folgenden Anionen zu nennen: Perchlorat, Hexafluorophosphat, Trifluormethylsulfonat, Tetrafluoroborat oder Perfluorbutylsulfonat.

Besonders bevorzugt ist als Komponente (c) ein anorganisches Salz ausgewählt aus der Gruppe: LiClO₄, LiCF₃SO₃, NaClO₄, NaCF₃SO₃, KClO₄, KPF₆, KCF₃SO₃, KC₄F₉SO₃, CaClO₄, CaPF₆, CaCF₃SO₃, Mg(ClO₄)₂, Mg(CF₃SO₃)₂, ZnClO₄, ZnPF₆ und CaCF₃SO₃.

Ganz besonders bevorzugt enthält die Zusammensetzung als anorganisches Salz (c) NaClO₄ oder KPF₆.

Das erfindungsgemäss als Komponente (c) verwendbare anorganische Salz kann in einer Menge von beispielsweise kleiner 10, zweckmässig kleiner 5, besonders bevorzugt 0,01 bis 3 Gew.-Teilen, bezogen auf 100 Gew.-Teile halogenhaltiges Polymer, eingesetzt werden.

In einer bevorzugten Ausführungsform der Erfindung beträgt das Gewichtsverhältnis von Komponente (b) zu Komponente (c) zwischen 1:1 und 100:1.

Bevorzugt ist als halogenhaltiges Polymer ein halogenhaltiges Weich-Polymer. Als Weich-Polymer bezeichnet man in Anlehnung an ASTM D 883-93 ein Polymer, welches ein Elastizitätsmodul kleiner 700 MPa bei 23°C und 50% relativer Feuchtigkeit aufweist, wobei die Bestimmung in Analogie zu ASTM D 747, D 638 oder D 882 (1993) durchgeführt wird. Halogenhaltiges Weich-Polymer enthält üblicherweise einen oder mehrere Weichmacher. Technisch wichtige Weichmacher sind organische Weichmacher.

Halogenhaltiges Weich-Polymer wird ferner dadurch definiert, dass es aufgrund seines Weichmachergehaltes zur Herstellung von halogenhaltigen Weich-Polymer-Artikeln geeignet ist. Dazu zählen z.B. Kabel- und Drahtummantelungen, Dachfolien, Dekorationsfolien, Schaumstoffe, Agrarfolien, Bürofolien, Kraftfahrzeug-Folien (auch Polyurethan-hinterschäumte) Schläuche, Dichtungsprofile und dergleichen mehr.

Als organische Weichmacher kommen beispielsweise solche aus den folgenden Gruppen in Betracht:
A) Phthalate (Phthalsäureester)
   Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und C₈-C₁₀-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexyl-, Dioctyl-, Di-iso-nonyl- und Di-iso-decylphthalat. Gebräuchlich sind die Abkürzungen DOP (Dioctylphthalat, Di-2-ethylhexyl-phthalat), DINP (Diisononylphthalat), DIDP (Diisodecylphthalat).
B) Ester aliphatischer Dicarbonsäuren, insbesondere Ester von Adipin-, Azelain- und Sebazinsäure. Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.
C) Trimellithsäureester,
   beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. Gebräuchliche Abkürzungen sind TOTM (Trioctyltrimellithat, Tri-2-ethylhexyl-trimellithat), TIDTM (Triisodecyltrimellithat) und TITDTM (Triisotridecyltrimellithat).
D) Epoxidweichmacher
   wie 1,2-Epoxide und Oxirane; Beispiele dafür sind epoxidiertes Polybutadien, epoxidiertes Sojabohnenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Phenoxy)-1,2-epoxypropan, Bisphenol-A-polyglycidylether, Vinylcyclohexendiepoxyd, Dicyclopentadiendiepoxyd und 3,4-Epoxycyclohexylmethyl-3,4-epoxycyclohexancarboxylat.
E) Polymerweichmacher
   Eine Definition dieser Weichmacher und Beispiele für solche sind in "Plastics Additives", Herausgeber R. Gächter und H. Müller, Hanser Verlag, 3. Auflage, 1990, Seite 393, Kapitel 5.9.6, sowie in "PVC Technology ", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie C₇-C₉-Alkanol- und C₉-C₁₁-Alkanolgemische. Besonders vorteilhaft sind Polyesterweichmacher aus den genannten Dicarbonsäuren und monofunktionellen Alkoholen.
F) Phosphorsäureester
   Eine Definition dieser Ester ist im vorstehend genannten Handbuch "Plastics Additives" auf Seite 390, Kapitel 5.9.5 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexyl-phosphat sowie ® Reofos 50 und 95.
G) Chlorierte Kohlenwasserstoffe (Paraffine)
H) Kohlenwasserstoffe
I) Monoester, z.B. Butyloleat, Phenoxyethyloleat, Tetrahydrofurfuryloleat, Glycerinmonooleat und Alkylsulfonsäureester.
J) Glykolester, z.B. Diglykolbenzoate.

Definitionen und Beispiele für Weichmacher der Gruppen G) bis J) sind den folgenden Handbüchern zu entnehmen:
"Plastics Additives", Herausgeber R. Gächter und H. Müller, Hanser Verlag, 1990, Seite 284, Kapitel 5.9.14.2 (Gruppe G)), und Kapitel 5.9.14.1 (Gruppe H)).
"PVC Technology", Herausgeber W.V. Titow, 4th. Ed., Elsevier Publishers, 1984, Seiten 171-173, Kapitel 6.10.2 (Gruppe G)), Seite 174, Kapitel 6.10.5 (Gruppe H)), Seite 173, Kapitel 6.10.3 (Gruppe I)) und Seiten 173-174, Kapitel 6.10.4 (Gruppe J)).

Besonders bevorzugt sind Weichmacher aus den Gruppen A) bis G), insbesondere A) bis F), vor allem die in diesen Gruppen als bevorzugt herausgestellten Weichmacher.

Im allgemeinen sind von den Weichmachern der Gruppen A), B) C)und E) 5 bis 120 , besonders 10 bis 100 Teile, von denen der Gruppe D) 0,5 bis 30, besonders 0,5 bis 20 Teile, von denen der Gruppe F) bzw. G) 1 bis 100, besonders 2 bis 80 Teile vorhanden. Es können auch Mischungen unterschiedlicher Weichmacher verwendet werden.

Die Weichmacher können dabei insgesamt in einer Menge von beispielsweise 5 bis 120, zweckmäßig 10 bis 100 und insbesondere 20 bis 70 Gew.-Teilen, bezogen auf 100 Gew.-Teile PVC, angewendet werden.

Das erfindungsgemässe halogenhaltige Polymer kann weitere Additive enthalten. Diese weiteren Additive gehören vorallem zur Gruppe der Thermo- und/oder Lichtstabilisatoren. Die thermische Stabilisierung umfasst dabei sowohl die Verarbeitung wie auch den Gebrauch (Langzeitstabilität). Diese weiteren Additive sind dem Fachmann bekannt und zum überwiegenden Teil kommerziell erhältlich. Es handelt sich beispielsweise um anorganische oder organische Zink-, Barium-, Blei-, Cadmium-, Aluminium-, Calcium-, Magnesium- oder Seltenerd-Verbindungen, Zeolithe, Hydrotalcite, Dawsonite, Magadiite, Kenyaite, Kanemite, Zinnstabilisatoren, 1,3-Diketoverbindungen, Polyole, N-haltige Verbindungen z.B. β-Aminocrotonate wie in EP 0 465 405, S. 6 Z. 9-14 erwähnt, α-Phenylindol, Pyrrole, sterisch gehinderte Amine (HALS), Dihydropyridine sowie deren Polymere, Epoxide, phenolische Antioxidantien (HANDBOOK OF PVC FORMULATING E.J. Wickson John Wiley & Sons, Inc., 1993 SS. 505-515), Naphthole, Thiophosphate, Füllstoffe (HANDBOOK OF PVC FORMULATING E.J. Wickson John Wiley & Sons, Inc., 1993 SS. 393-449) und Verstärkungsmittel (TASCHENBUCH der KA'e R. Gächter & H. Müller, Carl Hanser, 1990, SS. 549-615) (wie beispielsweise Calciumcarbonat, Magnesiumoxid, Magnesiumhydroxid, Silikate, Glasfasern, Talk, Kaolin, Kreide, Glimmer, Metalloxide und -hydroxide; Russ oder Graphit), Phosphite, Chelatoren (TASCHENBUCH der KA'e R. Gächter & H. Müller, Carl Hanser, 1990, SS. 109-131), Lichtschutzmittel, UV-Absorber (HANDBOOK OF PVC FORMULATING E.J. Wickson John Wiley & Sons, Inc., 1993 SS. 355-369), Gleitmittel (HANDBOOK OF PVC FORMULATING E.J. Wickson John Wiley & Sons, Inc., 1993 SS. 369-393), Impact-Modifier (IMPACT MODIFIERS FOR PVC J.T. LUTZ & D.L. DUNKELBERGER John Wiley & Sons, Inc., 1992) und Verarbeitungshilfen (TASCHENBUCH der KA'e R. Gächter & H. Müller, Carl Hanser, 1990, SS. 505-524), Fettsäureester, Parafflne, Treibmittel (HANDBOOK OF PVC FORMULATING E.J. Wickson John Wiley & Sons, Inc., 1993 SS. 525-551), optische Aufheller (TASCHENBUCH der KA'e R. Gächter & H. Müller, Carl Hanser, 1990, SS. 807-821), Gelierhilfen, Farbstoffe (HANDBOOK OF PVC FORMULATING E.J. Wickson John Wiley & Sons, Inc., 1993 SS. 449-475), Pigmente (TASCHENBUCH der KA'e R. Gächter & H. Müller. Carl Hanser, 1990, SS. 663-735), Flammschutzmittel und Rauchverminderer (HANDBOOK OF PVC FORMULATING E.J. Wickson John Wiley & Sons, Inc., 1993 SS. 551-579), Antifoggingagents (HANDBOOK OF PVC FORMULATING E.J. Wickson John Wiley & Sons, Inc., 1993 SS. 475-487), Biocide, Thiodipropionsäure und deren Ester, Dialkyldisulfide (HANDBOOK OF PVC FORMULATING E.J. Wickson John Wiley & Sons, Inc., 1993 SS. 515-525), Mercaptocarbonsäureester, peroxidzerstörende Verbindungen, Modifikatoren und weitere Komplexbildner für Lewis-Säuren.

Zweckmässig ist ein antistatisches halogenhaltiges Polymer, wie oben beschrieben, enthaltend zusätzlich mindestens eine anorganische Zink-, Barium-, Cadmium-, Aluminium-, Calcium-, Magnesium- oder Seltenerd-Verbindung, wie beispielsweise Zinkoxid, hydroxid, -chlorid, -sulfid oder überbasische Zinkoxid/hydroxid Additionsverbindungen, oder eine organische Zink-, Barium-, Cadmium-, Aluminium-, Calcium-, Magnesium- oder Seltenerd-Verbindung aus der Reihe der aliphatischen gesättigten C₂-C₂₂-Carboxylate, der aliphatischen ungesättigten C₃-C₂₂-Carboxylate, der aliphatischen C₂-C₂₂-Carboxylate, die mit wenigstens einer OH-Gruppe substituiert sind oder deren Kette wenigstens durch ein O-Atom unterbrochen ist (Oxasäuren), der cyclischen und bicyclischen Carboxylate mit 5-22 C-Atomen, der unsubstituierten, mit wenigstens einer OH-Gruppe substituierten und/oder C₁-C₁₆-alkylsubstituierten Phenylcarboxylate, der unsubstituierten, mit wenigstens einer OH-Gruppe substituierten und/oder C₁-C₁₆-alkylsubstituierten Naphthylcarboxylate, der Phenyl-C₁-C₁₆-alkylcarboxylate, der Naphthyl-C₁-C₁₆-alkylcarboxylate oder der gegebenenfalls mit C₁-C₁₂-Alkyl substituierten Phenolate.

Die genannten Metallverbindungen können dabei als Gemische unterschiedlicher Verbindungen vorliegen. Bevorzugt sind dabei sogenannte synergistische Metallseifenmischungen, beispielsweise der Metalle Ca und Zn oder Ba und Zn. Auch können organische Zink-, Barium-, Cadmium-, Aluminium-, Calcium-, Magnesium- oder Seltenerd-Verbindungen auf einen Hydrotalcit, Zeolith oder Dawsonit gecoatet sein; siehe hierzu auch DE-A-40 31. 818.

Namentlich zu erwähnen sind, als Beispiele, die Zink-, Barium-, Cadmium-, Aluminium-, Calcium-, Magnesium- oder Seltenerd-Salze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, 9,10-Dihydroxystearinsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Zinksalze der Monoester der divalenten Carbonsäuren, wie Oxalsäure, Malonsäure, Bemsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, 3,6,9-Trioxadecan-1,10-dicarbonsäure, Polyglykol-dicarbonsäure (n=10-12), Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure sowie Metall-Salze der 1-fach und 2-fach veresterten Phosphorsäure oder der 1-fach veresterten phosphorigen Säure, wie in JP 3,275,570 beschrieben.

Bevorzugt sind organische Metallverbindungen, insbesondere ein organisches Metallcarboxylat einer Carbonsäure mit 7 bis 18 C-Atomen (Metallseifen), wie beispielsweise Benzoate oder Allcanoate, bevorzugt Stearat, Oleat, Laurat, Palmitat, Behenat, Hydroxystearate, Dihydroxystearate oder (Iso)octanoat. Besonders bevorzugt sind Stearat, Oleat, Benzoat, p-tert-Butylbenzoat und 2-Ethylhexanoat.

Zu den verwendbaren und bevorzugten Aluminium-Verbindungen finden sich weitere Erläuterungen in US 4,060,512. Bei den anorganischen oder organischen Calcium- und Magnesium-Verbindungen sind weiterhin organische Calcium- oder Magnesium-Verbindungen, insbesondere Calcium- oder Magnesiumseifen, sowie Calciumoxid, Calciumhydroxid und überbasische Calcium-Verbindungen, wie sie z.B. in den EP 0 446 685, 0 394 547 und 0 279 493 beschrieben sind, bevorzugt. Unter dem Begriff Seltenerd-Verbindung sind vorallem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0 108 023.

Die anorganische oder bevorzugt organische Zink-, Barium-, Cadmium-, Aluminium-, Calcium-, Magnesium- oder Seltenerd-Verbindung kann in einer Menge von beispielsweise 0,001 bis 10, zweckmässig 0,01 bis 5, besonders bevorzugt 0,1 bis 3 Gew.-Teilen, bezogen auf 100 Gew.-Teile halogenhaltiges Polymer, eingesetzt werden.

Verwendbar im Rahmen dieser Erfindung sind auch anorganische oder organische Bleiverbindungen, für welche die obigen Angaben zu den Zink-, Barium-, Cadmium-, Aluminium-, Calcium-, Magnesium- oder Seltenerd-Verbindungen analog gelten. Hervorzuheben sind tribasisches Bleisulfat, dibasisches Bleiphosphit, dibasisches Bleiphthalat, dibasisches Bleicarbonat und neutrales oder dibasisches Bleistearat. Die Bleiverbindung kann in einer Menge von beispielsweise 0,001 bis 10, zweckmässig 0,01 bis 5, besonders bevorzugt 0,1 bis 3 Gew.-Teilen, bezogen auf 100 Gew.-Teile halogenhaltiges Polymer, eingesetzt werden.

Verwendbar im Rahmen dieser Erfindung sind auch Zinnverbindungen (Zinnstabilisatoren), beispielsweise organische Zinnverbindungen der Formeln (Sn-I) bis (Sn-IV)

[R₁]ᵢSn[-Q-R₂]₄₋ᵢ (Sn-I)

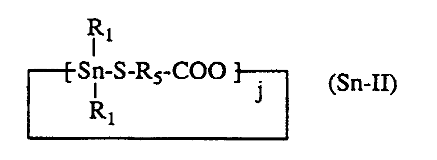

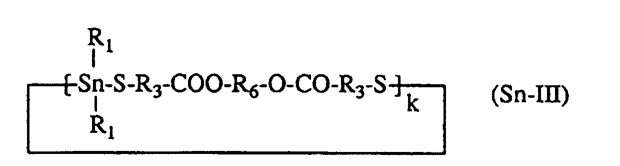

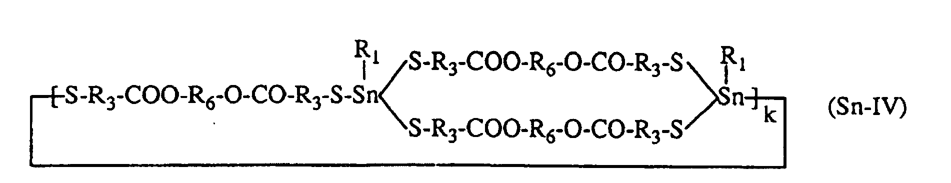

worin
R₁ C₁-C₁₂-Alkyl oder C₁-C₈-Alkoxycarbonylethyl darstellt,
Q die Bedeutung von -S- oder -O-CO- hat, und,
wenn Q für -S- steht,
R₂ C₈-C₁₈-Alkyl, ein Rest -R₃-COO-R₄ oder -(CH₂)₂-O-CO-R₄ ist, oder,
wenn Q für -O-CO- steht,
R₂ C₁-C₁₈-Alkyl, C₂-C₁₈-Alkenyl, unsubstituiertes oder durch C₁-C₄-Alkyl substituiertes Phenyl darstellt;
R₃ Methylen, Ethylen oder o-Phenylen bedeutet,
R₄ C₅-C₁₈-Alkyl ist,
R₅ Methylen, Ethylen oder o-Phenylen bedeutet,
R₆ C₂-C₄-Alkylen oder durch Sauerstoff unterbrochenes C₄-C₈-Alkylen darstellt,
i die Zahl 1 oder 2 bedeutet,
j eine Zahl aus dem Bereich von 1 bis 6 darstellt und
k eine Zahl aus dem Bereich von 1 bis 3 ist.

Bevorzugt sind Organozinnverbindungen der Formeln (Sn-I) bis (Sn-IV), worin
R₁ C₁-C₁₂-Alkyl darstellt,
wenn Q für -S- steht,
R₂ C₈-C₁₈-Alkyl oder ein Rest -R₃-COO-R₄ ist, oder,
wenn Q für -O-CO- steht,
R₂ C₇-C₁₈-Alkyl, C₈-C₁₈-Alkenyl oder Phenyl darstellt;
R₃ Methylen oder Ethylen bedeutet,
R₄ C₅-C₁₈-Alkyl ist,
R₅ Ethylen oder o-Phenylen bedeutet,
R₆ C₂-C₄-Alkylen oder durch Sauerstoff unterbrochenes C₄-C₈-Alkylen darstellt,
i die Zahl 1 oder 2 bedeutet,
j eine Zahl aus dem Bereich von 1 bis 4 darstellt, und
k die Zahl 1 oder 2 ist.

Besonders bevorzugte Organozinnverbindungen sind
(CH₃CH₂CH₂CH₂)₂Sn(SCH₂CO₂CH₂CH(CH₂CH₃)CH₂CH₂CH₂CH₃)₂ [Dibutylzinn-bis-(2-ethylhexylthioglycolat)],
CH₃CH₂CH₂CH₂Sn(SCH₂CO₂CH₂CH(CH₂CH₃)CH₂CH₂CH₂CH₃)₃ [Monobutylzinn-tris-(2-ethylhexylthioglycolat)] oder (CH₃CH₂CH₂CH₂)₂Sn(O-CO-C₇H₁₅)₂ [Dibutylzinn-bis-(iso-octoat)].

Die bevorzugt organische Zinnverbindung kann in einer Menge von beispielsweise 0,001 bis 10, zweckmässig 0,01 bis 5, besonders bevorzugt 0,1 bis 3 Gew.-Teilen, bezogen auf 100 Gew.-Teile halogenhaltiges Polymer, eingesetzt werden.

Verwendbar im Rahmen dieser Erfindung sind auch Epoxyverbindungen, wie 1,2-Epoxide und Oxirane, welche in Mengen von beispielsweise bis zu 10 Gew.-Teilen, bezogen auf 100 Gew.-Teile halogenhaltiges Polymer, zweckmässig bis zu 5 Gew.-Teilen und vorzugsweise von 0,01 bis zu 2 Gew.-Teilen, angewendet werden. Beispiele dafür sind epoxidiertes Polybutadien, epoxidiertes Sojabohnenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Phenoxy)-1,2-epoxypropan, Bisphenol-A-polyglycidylether, Vinylcyclohexendiepoxyd, Dicyclopentadiendiepoxyd und 3,4-Epoxycyclohexylmeihyl-3,4-epoxycyclohexancarboxylat.

Weitere im Rahmen der Erfindung verwendbaren Epoxidverbindungen können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten wenigstens einen Epoxyrest, insbesondere solche der Formel II 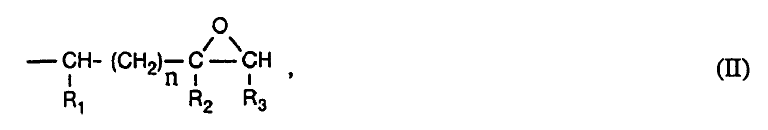 wobei dieser direkt an Kohlenstoff, Sauerstoff-, Stickstoff- oder Schwefelatome gebunden ist, worin R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist.

Beispielhaft für Epoxidverbindungen sind zu erwähnen:
I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmässig in der Gegenwart von Basen.
   Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.
   Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.
   Weiterhin können aromatische Carbonsäuren Verwendung finden, wie beispielsweise Benzoesäure, Phthalsäure, Isophthalsäure, Trimellithsäure oder Pyromellithsäure.
   Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.
   Weitere im Rahmen dieser Erfindung verwendbare Epoxidverbindungen finden sich in der EP 0 506 617.
II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschliessender Alkalibehandlung.
   Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-dioi, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie C₇-C₉-Alkanol- und C₉-C₁₁-Alkanolgemischen. Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
   Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
   Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-niethoxyphenylether.
III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
   Zu den (N-Glycidyl)-Verbindungen zählen aber auch N,N'-Di-, N,N',N"-Tri- und N,N',N",N'''-Tetraglycidylderivate von Cycloalkylenharnstoffen, wie Ethylenhamstoff oder 1,3-Propylenhamstoff, und N,N'-Diglycidylderivate von Hydantoinen, wie von 5,5-Dimethylhydantoin oder Glykoluril und Triglycidylisocyanurat.
IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.
V) Epoxidverbindungen mit einem Rest der Formel II, worin R₁ und R₃ zusammen -CH₂-CH₂- bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Eine Epoxidverbindung mit einem Rest der Formel II, worin R₁ und R₃ zusammen -CH₂-CH₂- sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:
a) flüssige Bisphenol-A-diglycidylether wie Araldit® GY 240, Araldit® GY 250, Araldit® GY 260, Araldit® GY 266, Araldit® GY 2600, Araldit® MY 790;
b) feste Bisphenol-A-diglycidylether wie Araldit®GT 6071, Araldit®GT 7071, Araldit® GT 7072, Araldit® GT 6063, Araldit® GT 7203, Araldit® GT 6064, Araldit®GT 7304, Araldit® GT 7004, Araldit® GT 6084, Araldit® GT 1999, Araldit® GT 7077, Araldit® GT 6097, Araldit® GT 7097, Araldit® GT 7008, Araldit® GT 6099, Araldit® GT 6608, Araldit® GT 6609, Araldit® GT 6610;
c) flüssige Bisphenol-F-diglycidylether wie Araldit®GY 281, Araldit® PY 302, Araldit® PY 306;
d)feste Polyglycidylether von Tetraphenylethan wie CG Epoxy Resin® 0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit® DY 0390, Araldit® DY 0391;
h)flüssige Glycidylether von Carbonsäuren wie Shell® Cardura E Terephthalsäureester, Trimellithsäureester, Araldit® PY 284;
i) feste heterocyclische Epoxidharze (Triglycidylisocyanurat) wie Araldit® PT 810;
j) flüssige cycloaliphatische Epoxidharze wie Araldit® CY 179;
k) flüssige N,N,O-Triglycidylether von p-Aminophenol wie Araldit® MY 0510;
l) Tetraglycidyl-4-4'-methylenbenzamin oder N,N,N',N'-Tetraglycidyldiaminophenylmethan wie Araldit® MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Diglycidylverbindungen mit aromatischen Strukturen, wie beispielsweise Phenylresten, eingesetzt.

Gegebenenfalls kann auch ein Gemisch von Epoxidverbindungen unterschiedlicher Struktur eingesetzt werden.

Besonders bevorzugt sind als mehrfunktionelle Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F). Verwendbare 1,3-Diketoverbindungen können lineare oder cyclische Dicarbonylverbindungen sein. Bevorzugt werden Diketoverbindungen der Formel (III) verwendet, 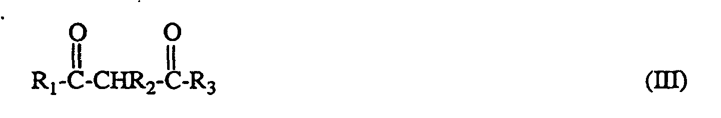 worin R₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Cycloalkyl, durch C₁-C₄-Alkyl substituiertes C₅-C₁₂-Cycloalkyl oder eine Gruppe -R₅-S-R₆ oder -R₅-O-R₆ bedeutet, R₂ Wasserstoff, C₁-C₈-Alkyl, C₂-C₁₂-Alkenyl, Phenyl, C₇-C₁₂-Alkylphenyl, C₇-C₁₀-Phenylalkyl oder eine Grupe -CO-R₄ bedeutet, R₃ eine der für R₁ gegebenen Bedeutungen hat oder C₁-C₁₈-Alkoxy bedeutet, R₄ C₁-C₄-Alkyl oder Phenyl bedeutet, R₅ C₁-C₁₀-Alkylen bedeutet und R₆ C₁-C₁₂-Alkyl, Phenyl, C₇-C₁₈-Alkylphenyl oder C₇-C₁₀-Phenylalkyl bedeutet.

Hierzu gehören die Hydroxylgruppen enthaltenden Diketone der EP-A-346 279 und die Oxa- und Thia-diketone der EP-A-307 358.

R₁ und R₃ als Alkyl können insbesondere C₁-C₁₈-Alkyl sein, wie z.B. Methyl, Ethyl, n-Propyl, Isopropyl, n-Butyl, tert. Butyl, Pentyl, Hexyl, Heptyl, Octyl, Decyl, Dodecyl oder Octadecyl.

R₁ und R₃ als Hydroxyalkyl stellen insbesondere eine Gruppe -(CH₂)ₙ-OH dar, worin n 5, 6 oder 7 ist.

R₁ und R₃ als Alkenyl können beispielsweise Vinyl, Allyl, Methallyl, 1-Butenyl, 1-Hexenyl oder Oleyl bedeuten, vorzugsweise Allyl.

R₁ und R₃ als durch OH, Alkyl, Alkoxy oder Halogen substituiertes Phenyl können beispielsweise Tolyl, Xylyl, tert. Butylphenyl, Methoxyphenyl, Ethoxyphenyl, Hydroxyphenyl, Chlorphenyl oder Dichlorphenyl sein.

R₁ und R₃ als Phenylalkyl sind insbesondere Benzyl. R₂ und R₃ als Cycloalkyl oder Allcyl-cycloalkyl sind insbesondere Cyclohexyl oder Methylcyclohexyl.

R₂ als Alkyl kann insbesondere C₁-C₄-Alkyl sein. R₂ als C₂-C₁₂-Alkenyl kann insbesondere Allyl sein. R₂ als Alkylphenyl kann insbesondere Tolyl sein. R₂ als Phenylalkyl kann insbesondere Benzyl sein. Vorzugsweise ist R₂ Wasserstoff. R₃ als Alkoxy kann z.B. Methoxy, Ethoxy, Butoxy, Hexyloxy, Octyloxy, Dodecyloxy, Tridecyloxy, Tetradecyloxy oder Octadecyloxy sein. R₅ als C₁-C₁₀-Alkylen ist insbesondere C₂-C₄-Alkylen. R₆ als Alkyl ist insbesondere C₄-C₁₂-Alkyl, wie z.B. Butyl, Hexyl, Octyl, Decyl oder Dodecyl. R₆ als Alkylphenyl ist insbesondere Tolyl. R₆ als Phenylalkyl ist insbesondere Benzyl.

Beispiele für 1,3-Dicarbonylverbindungen der Formel (III) sind Acetylaceton, Acetylcyclopentanon, Benzoylcyclopentanon, Acetylbutyrolacton, Benzoylbutyrolacton, Butanoylaceton, Heptanoylaceton, Stearoylaceton, Palmitoylaceton, Lauroylaceton, 7-tert.Nonylthio-heptandion-2,4, Benzoylaceton, Dibenzoylmethan, Lauroylbenzoylmethan, Palmitoyl-benzoylmethan, Stearoyl-benzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoyl-formylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester, Stearoylessigsäure-ethyl-, -propyl-, -butyl-, -hexyl- oder -octylester und Dehydracetsäure sowie deren Barium-, Magnesium-, Calcium-, Zink- oder Aluminiumsalze.

Bevorzugt sind 1,3-Diketoverbindungen der Formel (III), worin R₁ C₁-C₁₈-Alkyl, Phenyl, durch OH, Methyl oder Methoxy substituiertes Phenyl, C₇-C₁₀-Phenylalkyl oder Cyclohexyl ist, R₂ Wasserstoff ist und R₃ eine der für R₁ gegebenen Bedeutungen hat.

Besonders bevorzugt sind Magnesium- und Calciumacetylacetonate, sowie Zn- und Al-acetylacetonate, Stearoylbenzoylmethan, Dibenzoylmethan, Benzoyloctanoylmethan sowie der Trisacetessigester des Trisethylisocyanurats wie in US 4,339,383 beschrieben. Eine zusammenfassende Übersicht über 1,3-Diketoverbindungen ist in EP 006318, EP 0 046 161, EP 0 035 268 und EP 0 040 286 gegeben.

Die 1,3-Diketoverbindungen können in einer Menge von beispielsweise 0,01 bis 10, zweckmässig 0,01 bis 2 und insbesondere 0,05 bis 1 Gew.-Teilen, bezogen auf 100 Gew.-Teile halogenhaltiges Polymer, angewendet werden.

Weitere mögliche zusätzlich verwendbare Additive sind 1,3-Ketoester der Formel (IV) 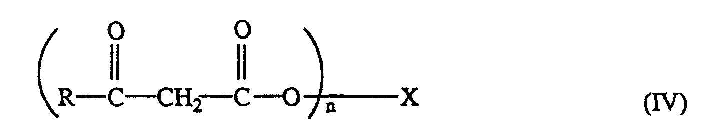 worin n 1, 2, 3, 4 oder 6 ist und, wenn n = 1 ist, R Phenyl und X eine Alkylgruppe mit 10 bis 20 C-Atomen,
wenn n = 2 ist, R Alkyl mit 1 bis 4 C-Atomen oder Phenyl und X Alkylen mit 4 bis 12 C-Atomen, Alkylen mit 2 bis 12 C-Atomen, das mit wenigstens einer C₁-C₈-Alkylgruppe substituiert ist, -CH₂-CH₂-S-CH₂-CH₂-S-CH₂-CH₂- oder -CH₂-CH₂-S-CH₂-CH₂- , wenn n = 3 ist, R Alkyl mit 1 bis 4 C-Atomen oder Phenyl und X CH₃CH₂C(CH₂-)₃ , wenn n = 4 ist, R Alkyl mit 1 bis 4 C-Atomen oder Phenyl und X eine Gruppe 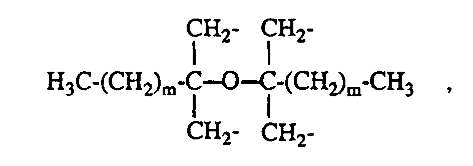 worin m 0 oder 1 ist, und wenn n = 6 ist, R Alkyl mit 1 bis 4 C-Atomen oder Phenyl und X die Gruppe 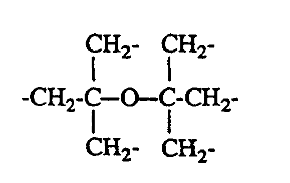 darstellen.

R als Alkyl mit 1 bis 4 C-Atomen bedeutet z.B. Methyl, Ethyl, Propyl oder Butyl.

X als Alkyl mit 10 bis 20 C-Atomen kann geradkettig oder verzweigt sein und bedeutet beispielsweise n-Decyl, n-Dodecyl oder n-Octadecyl.

X bedeutet als C₄-C₁₂-Alkylen, resp. als C₂-C₁₂-Alkylen, das durch wenigstens eine C₁-C₈-Alkylgruppe substituiert ist, zum Beispiel 1,2-Di-tert-butyl-dimethylen, Tetramethylen, Hexamethylen, 2,2-Dimethyltrimethylen, 2-Ethyl-2-butyl-trimethylen, 2-Methyl-2-propyltrimethylen, Octamethylen, Nonamethylen, Decamethylen oder Dodecamethylen.

Die Variable n bedeutet bevorzugt 1, 2 oder 3 wie in EP 0 433 230 beschrieben.

Weitere mögliche zusätzlich verwendbare Additive sind Verbindungen der Formel (V) 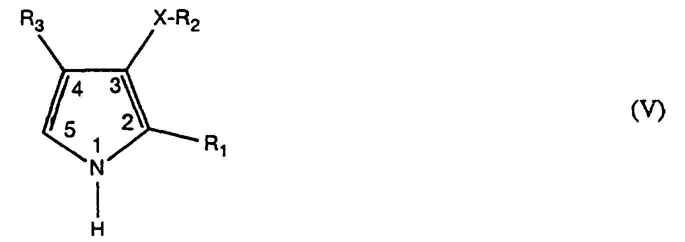 worin X eine Gruppe 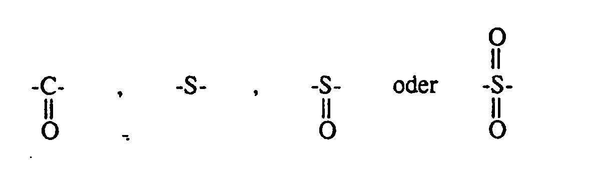 bedeutet, R₁ und R₂ unabhängig voneinander C₁-C₂₀-Alkyl, durch Hydroxy und/oder Halogen substituiertes C₁-C₁₀-Alkyl, C₃-C₂₀-Alkenyl, C₅-C₁₂-Cycloalkyl, durch C₁-C₄₋Alkyl substituiertes C₅-C₈-Cycloalkyl, Phenyl oder durch 1 bis 3 Reste A₁ substituiertes Phenyl sind, wobei die Reste A₁ unabhängig voneinander C₁-C₁₀-Alkyl, Halogen, Hydroxy, Methoxy oder Ethoxy bedeuten,
R₁ und R₂ ferner C₇-C₁₀-Phenylalkyl oder am Phenyl durch 1 bis 3 Reste A₂ substituiertes C₇-C₁₀-Phenylalkyl sind, wobei die Reste A₂ unabhängig voneinander C₁-C₂₀-Alkyl, Halogen, Hydroxy, Methoxy oder Ethoxy bedeuten, und
R₃ Phenyl oder durch 1 bis 3 Reste A₃ substituiertes Phenyl ist, wobei die Reste A₃ unabhängig voneinander C₁-C₁₀-Alkyl, Halogen, Hydroxy, Methoxy, Ethoxy oder (C₁-C₈₋Alkyl)oxycarbonyl sind, mit den Bedingungen, dass mindestens einer der Reste R₁ und R₂ Phenyl oder definitionsgemäss substituiertes Phenyl ist und R₁ verschieden von Methyl ist, wenn R₂ Phenyl bedeutet.

Die Verbindungen der obigen Formel zeichnen sich durch eine sehr gute stabilisierende Wirkung sowohl gegen thermischen als auch lichtinduzierten Abbau aus. Besonders bemerkenswert ist die langzeitstabilisierende Wirkung gegen thermischen Abbau.

Vorzugsweise ist R₁ verschieden von C₁-C₃-Alkyl, insbesondere C₁-C₂₀-Alkyl, wenn R₂ Phenyl bedeutet.

Halogen bedeutet bevorzugt Chlor.

Alkyl mit bis zu 20 C-Atomen bedeutet zum Beispiel Methyl, Ethyl, Propyl, Butyl, t-Butyl, Pentyl, Hexyl, Heptyl, Octyl, i-Octyl, i-Nonyl, Decyl, Dodecyl oder Octadecyl.

Durch Hydroxy und/oder Halogen substituiertes C₁-C₁₀-Alkyl bedeutet zum Beispiel 5-Hydroxypentyl, 2,3,5-Trihydroxypentyl oder 5-Chlorpentyl.

C₃-C₂₀-Alkenyl ist beispielsweise Allyl, 2-Methallyl, 3-Methylbut-2-enyl, 3-Methylbut-3-enyl, Hexenyl, Decenyl, Undecenyl, Heptadecenyl oder Oleyl. Bevorzugte Bedeutungen sind Allyl, Methallyl und Oleyl.

C₅-C₁₂-Cycloalkyl bedeutet zum Beispiel Cyclopentyl, Cyclohexyl, Cycloheptyl, Cyclooctyl, Cyclodecyl oder Cyclododecyl. C₅-C₇-Cycloalkyl, insbesondere Cyclohexyl, ist bevorzugt.

C₅-C₈-Cycloalkyl, welches durch C₁-C₄-Alkyl, insbesondere Methyl substituiert ist, bedeutet zum Beispiel Methylcyclohexyl oder tert-Butylcyclohexyl.

Beispiele für Phenyl, welches durch 1 bis 3 definitionsgemässe Reste substituiert ist, sind o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 2-Methyl-4-tert-butylphenyl, 2-Ethylphenyl, 2,6-Diethylphenyl, 2,6-Diethyl-4-methylphenyl, 2,6-Diisopropylphenyl, 4-tert-Butylphenyl, p-Nonylphenyl, o-, m- oder p-Chlorphenyl, 2,3-Dichlorphenyl, 2,4-Dichlorphenyl, 2,5-Dichlorphenyl, 2,6-Dichlorphenyl, 3,4-Dichlorphenyl, 2,4,5-Trichlorphenyl, 2,4,6-Trichlorphenyl, o-, m- oder p-Hydroxyphenyl, o-, m- oder p-Methoxyphenyl, o- oder p-Ethoxyphenyl, 2,4-Dimethoxyphenyl, 2,5-Dimethoxyphenyl, 2,5-Diethoxyphenyl, o-, m- oder p-Methoxycarbonyl, 2-Chlor-6-methylphenyl, 3-Chlor-2-methylphenyl, 3-Chlor-4-methylphenyl, 4-Chlor-2-methylphenyl, 5-Chlor-2-methylphenyl, 2,6-Dichlor-3-methylphenyl, 2-Hydroxy-4-methylphenyl, 3-Hydroxy-4-methylphenyl, 2-Methoxy-5-methylphenyl, 4-Methoxy-2-methylphenyl, 3-Chlor-4-methoxyphenyl, 3-Chlor-6-methoxyphenyl, 3-Chlor-4,6-dimethoxyphenyl und 4-Chlor-2,5-dimethoxyphenyl.

C₇-C₁₀-Phenylalkyl ist zum Beispiel Benzyl oder 2-Phenylethyl. Benzyl ist bevorzugt. Falls die Phenylgruppe in diesen Resten durch 1 bis 3 definitionsgemässe Gruppen substituiert ist, kann sie die oben angegebenen Bedeutungen annehmen. An der Phenylgruppe durch C₁-C₂₀-Alkyl, bevorzugt C₈-C₁₄-Alkyl, substituiertes C₇-C₁₀-Phenylalkyl ist eine der bevorzugten Bedeutungen. Als Beispiel ist ferner Dodecylbenzyl zu nennen. Eine genauere Ausführung ist EP 0 465 405 zu entnehmen.

Weitere mögliche zusätzlich verwendbare Additive sind Pyrrole der Formel (VI) 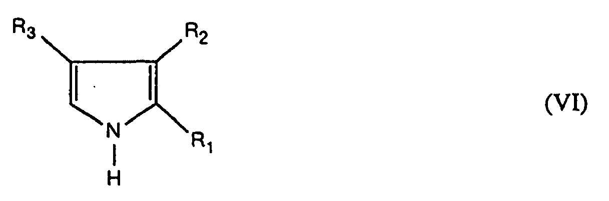 worin R₁ Wasserstoff, Alkyl, Cycloalkyl, Aryl, Alkoxycarbonylmethyl, gegebenenfalls verestertes α-Hydroxyalkyl, gegebenenfalls verestertes α-Hydroxycycloalkylmethyl, gegebenenfalls verestertes α-Hydroxyaralkyl, Alkoxymethyl, Alkylthiomethyl, Aryloxymethyl, Arylthiomethyl, Cycloalkoxymethyl, Cycloalkylthiomethyl, Aralkoxymethyl, Aralkylthiomethyl, Alkoxy, Alkylthio, Cycloalkoxy, Cycloalkylthio, Aralkoxy, Arylalkylthio, Aryloxy, Arylthio, Halogen, Mercapto, Mercaptomethyl oder Hydroxy ist, R₂ Wasserstoff, Alkyl, Cycloalkyl, Aryl, gegebenenfalls verestertes α-Hydroxyalkyl, wobei dessen Alkylteil zusammen mit R₁ Alkylen sein kann, gegebenenfalls verestertes α-Hydroxycycloalkylmethyl, gegebenenfalls verestertes α-Hydroxyaralkyl, Alkoxy, Cycloalkyloxy, Aralkoxy, Aryloxy, Alkylthio, Cycloalkylthio, Aralkylthio, Arylthio, Alkoxymethyl, Alkylthiomethyl, Aryloxymethyl, Arylthiomethyl, Cycloalkoxymethyl, Cycloalkylthiomethyl, Aralkoxymethyl, Arylalkylthiomethyl, Hydroxy, Cyano, Carboxyl, versalztes, verestertes oder amidiertes Carboxyl oder Acyl ist, wobei Acyl zusammen mit R₁ -CO- Alkylen sein kann, worin -CO- in 3-Stellung gebunden ist, oder Halogen, Mercapto oder Mercaptomethyl ist, und R₃ Alkyl, Cycloalkyl, Aralkyl, Aryl, gegebenenfalls verestertes Hydroxymethyl, Alkoxymethyl, Alkylthiomethyl, Cycloalkoxymethyl, Cycloalkylthiomethyl, Aralkoxymethyl, Arylalkylthiomethyl, Aryloxymethyl oder Arylthiomethyl, Alkoxy, Alkylthio, Cycloalkoxy, Cycloalkylthio, Aralkoxy, Aralkylthio, Aryloxy, Arylthio, Halogen, Mercapto oder Mercaptomethyl ist, oder wenn R₂ versalztes Carboxyl ist, R₃ Wasserstoff ist und R₁ die angegebene Bedeutung hat, oder worin R₃ Hydroxy ist, und R₁ Wasserstoff, Alkyl oder Aryl ist und R₂ Wasserstoff, Alkyl, Aryl oder Acyl ist, oder ein Salz davon. Eine Ausführung hierzu gibt EP 0 022 087.

Weitere mögliche zusätzlich verwendbare Additive sind Verbindungen der Formel (VII) 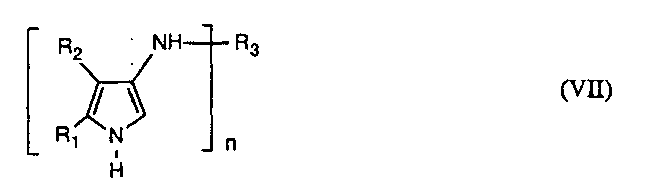 worin n 1 oder 2 ist, R₁ C₁-C₄-Alkyl bedeutet, R₂ eine Gruppe der Formel IIa, IIb, IIc oder IId darstellt, 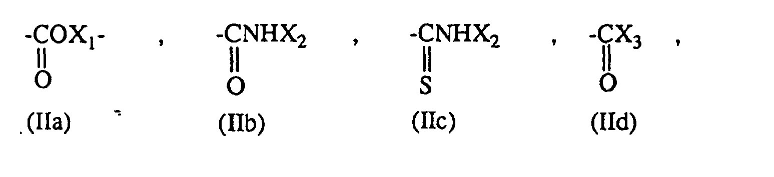 X₁ Wasserstoff, C₁-C₂₀-Alkyl, durch ein oder zwei Sauerstoffatome oder Schwefelatome unterbrochenes oder/und durch OH substituiertes C₃-C₆-Alkyl, C₃-C₂₀-Alkenyl, C₅-C₁₂-Cycloalkyl, durch C₁-C₄-Alkyl substituiertes C₅-C₁₂-Cycloalkyl, Phenyl, durch C₁-C₁₀-Alkyl, Chlor, Hydroxy, Methoxy oder/und Ethoxy substituiertes Phenyl, C₇-C₁₀-Phenylalkyl oder am Phenylrest durch C₁-C₂₀-Alkyl, Chlor, Hydroxy, Methoxy oder/und Ethoxy substituiertes C₇-C₁₀-Phenylalkyl ist, X₂ Phenyl oder durch 1 bis 3 Reste substituiertes Phenyl darstellt, wobei die Reste ausgewählt werden aus der Gruppe bestehend aus C₁-C₄-Alkyl, Chlor, Hydroxy, Methoxy, Ethoxy und Acetylamino, X₃ C₁-C₈-Alkyl oder Phenyl bedeutet, wenn n 1 ist, R₃ eine Gruppe der Formeln IIIa bis IIIg bedeutet, 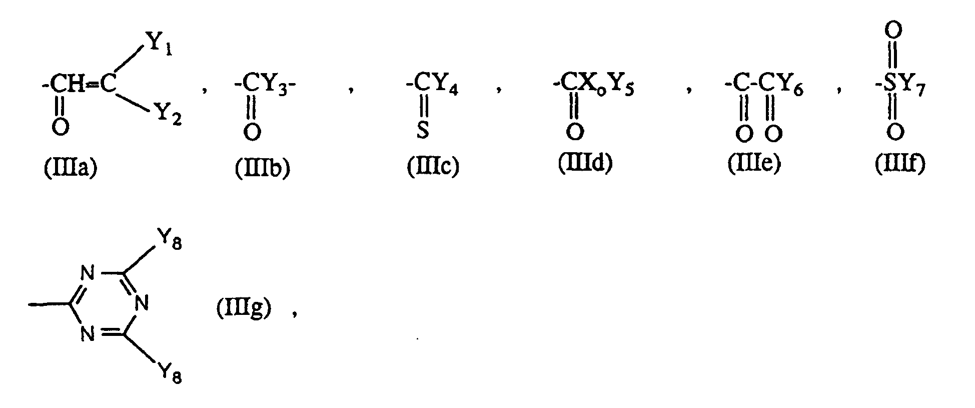 X₀ ein Sauerstoffatom oder Schwefelatom ist, Y₁ und Y₂ unabhängig voneinander -CN, Benzoyl, C₂-C₄-Alkanoyl oder C₂-C₄-Alkoxycarbonyl sind, Y₃ C₁-C₂₀-Alkyl, C₃-C₂₀-Alkenyl, Phenyl, durch C₁-C₄-Alkyl, Chlor, -NO₂, Methoxy oder/und Ethoxy substituiertes Phenyl, 2-Phenylethenyl, Di(C₁-C₄-alkyl)amino, Diphenylamino, C₁-C₂₀-Alkylamino, C₃-C₈-Cycloalkylamino, Phenylamino, am Phenylring durch C₁-C₄-Alkyl, Chlor, Hydroxy, Methoxy oder/und Ethoxy substituiertes Phenylamino, Benzylamino, Benzolsulfonamido oder Toluolsulfonamido darstellt, Y₄ Di(C₁-C₄-alkyl)amino, Diphenylamino, C₁-C₈-Alkylamino, Phenylamino, am Phenylring durch C₁-C₄-Alkyl, Chlor, Hydroxy, Methoxy oder/und Ethoxy substituiertes Phenylamino oder Benzylamino ist, Y₅ C₁-C₂₀-Alkyl, durch ein oder zwei Sauerstoffatome unterbrochenes C₃-C₆-Alkyl, C₅-C₁₂-Cycloalkyl, durch C₁-C₄-Alkyl substituiertes C₅-C₁₂-Cycloalkyl, Phenyl, C₇-C₁₀-Phenylalkyl oder am Phenylrest durch C₁-C₂₀-Alkyl substituiertes C₇-C₁₀-Phenylalkyl bedeutet, Y₆ C₁-C₄-Alkoxy, Phenylamino oder an der Phenylgruppe durch C₁-C₄-Alkyl, Chlor, Hydroxy, Methoxy oder/und Ethoxy substituiertes Phenylamino ist, Y₇ C₁-C₄-Alkyl, Phenyl oder durch C₁-C₄-Alkyl, Chlor, -NO₂, (C₁-C₁₂-Alkyl)oxycarbonyl und/oder Phenyloxycarbonyl substituiertes Phenyl darstellt, die Reste Y₈ unabhängig voneinander C₁-C₄-Alkoxy oder Allyloxy bedeuten, und wenn n 2 ist, R₃ eine Gruppe der Formel IVa, IVb, IVc oder IVd darstellt, 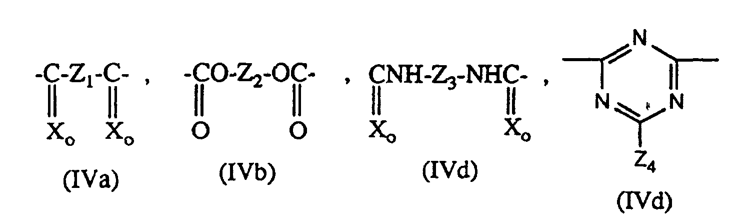 X₀ die oben angegebene Bedeutung besitzt, Z₁ eine direkte Bindung, C₁-C₁₂-Alkylen oder Phenylen bedeutet, Z₂ C₂-C₁₂-Alkylen oder 3-Oxapentylen ist, Z₃ C₄-C₈-Alkylen oder Phenylen und Z₄ C₁-C₄-Alkoxy oder Allyloxy darstellen.

Alkyl mit bis zu 20 C-Atomen bedeutet zum Beispiel Methyl, Ethyl, Propyl, Butyl, t-Butyl, Pentyl, Hexyl, Heptyl, Octyl, i-Octyl, i-Nonyl, Decyl, Dodecyl oder Octadecyl.

R₁ bedeutet vorzugsweise geradkettiges C₁-C₄-Alkyl, insbesondere Methyl.

Eine bevorzugte Bedeutung von X₁ ist C₁-C₁₈-Alkyl, insbesondere C₁-C₁₂-Alkyl, z.B. Methyl oder Ethyl.

X₃ bedeutet als Alkyl vorzugsweise Methyl oder Ethyl, insbesondere Methyl.

Y₅ besitzt als Alkyl vorzugsweise 1 bis 4 Kohlenstoffatome. Methyl und Ethyl sind besonders bevorzugte Bedeutungen für Y₅.

C₁-C₄-Alkoxy ist z.B. Methoxy, Ethoxy, Propoxy oder Butoxy.

C₃-C₆-Alkyl, welches durch 1 oder 2 Sauerstoffatome unterbrochen ist, bedeutet beispielsweise 3-Oxabutyl, 3-Oxapentyl, 3-Oxaheptyl, 3,6-Dioxaheptyl oder 3,6-Dioxaoctyl.

C₃-C₆-Alkyl, welches durch 1 oder 2 Sauerstoffatome oder Schwefelatome unterbrochen oder/und durch OH substituiert ist, kann zum Beispiel ausser den im vorangehenden Absatz angegebenen Resten auch 3-Thiabutyl, 3-Thiapentyl, 3,6-Dithiaheptyl, 3,6-Dithiaoctyl, 5-Hydroxy-3-oxapentyl, 5-Hydroxy-3-thiapentyl oder 4-Hydroxybutyl bedeuten.

C₃-C₂₀-Alkenyl ist beispielsweise Allyl, 2-Methallyl, 3-Methylbut-2-enyl, 3-Methylbut-3-enyl, Hexenyl, Decenyl, Undecenyl, Heptadecenyl oder Oleyl. Bevorzugte Bedeutungen sind Allyl, Methallyl und Oleyl.

C₅-C₁₂-Cycloalkyl, welches gegebenenfalls durch C₁-C₄-Alkyl, insbesondere Methyl, substituiert sein kann, bedeutet zum Beispiel Cyclopentyl, Cyclohexyl, Cycloheptyl, Cyclooctyl, Cyclodecyl, Cyclododecyl oder Methylcyclohexyl. Unsubstituiertes oder substituiertes C₅-C₈-Cycloalkyl, insbesondere Cyclohexyl, ist bevorzugt.

Beispiele für Phenyl, welches durch, bevorzugt 1 bis 3, definitionsgemässe Reste substituiert ist, sind o-, m- oder p-Chlorphenyl, 2,3-Dichlorphenyl, 2,4-Dichlorphenyl, 2,5-Dichlorphenyl, 2,6-Dichlorphenyl, 3,4-Dichlorphenyl, 2,4,5-Trichlorphenyl, 2,4,6-Trichlorphenyl, o-, m-oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 2-Methyl-4-tert-butylphenyl, 2-Ethylphenyl, 2,6-Diethylphenyl, 2,6-Diethyl-4-methylphenyl, 2,6-Diisopropylphenyl, 4-tert-Butylphenyl, p-Nonylphenyl, 2-Chlor-6-methylphenyl, 3-Chlor-2-methylphenyl, 3-Chlor-4.-methylphenyl, 4-Chlor-2-methylphenyl, 5-Chlor- 2-methylphenyl, 2,6-Dichlor-3-methylphenyl, o-, m- oder p-Methoxyphenyl, o-oder p-Ethoxyphenyl, 2,4-Dimethoxyphenyl, 2,5-Dimethoxyphenyl, 2,5-Diethoxyphenyl, 2-Methoxy-5-methylphenyl, 4-Methoxy-2-methylphenyl, 3-Chlor-4-methoxyphenyl, 3-Chlor-6-methoxyphenyl, 3-Chlor-4,6-dimethoxyphenyl, 4-Chlor-2,5-dimethoxyphenyl, o-, m- oder p-Hydroxyphenyl, 2-Hydroxy-4-methylphenyl, 3-Hydroxy-4-methylphenyl, o-, m- oder p-Acetylaminophenyl, o-, m- oder p-Nitrophenyl, p-(C₁-C₁₂-Alkyl)oxycarbonylphenyl und p-Phenyloxycarbonylphenyl.

Bedeuten Y₃, Y₄ und Y₆ Phenylamino, welches am Phenylrest durch, bevorzugt 1 bis 3, definitionsgemässe Reste substituiert ist, so kann der substituierte Phenylrest z.B. die oben angegebenen Bedeutungen besitzen.

C₇-C₁₀-Phenylalkyl ist zum Beispiel Benzyl oder 2-Phenylethyl. Benzyl ist bevorzugt. Falls die Phenylgruppe in diesen Resten durch, bevorzugt 1 bis 3, definitionsgemässe Gruppen substituiert ist, kann sie die oben angegebenen Bedeutungen annehmen. An der Phenylgruppe durch C₁-C₂₀-Alkyl, bevorzugt C₈-C₁₄-Alkyl, substituiertes C₇-C₁₀-Phenylalkyl ist eine der bevorzugten Bedeutungen. Als Beispiel ist ferner Dodecylbenzyl zu nennen.

C₂-C₄-Alkanoyl bedeutet beispielsweise Acetyl, Propanoyl oder Butanoyl. Acetyl ist bevorzugt.

C₂-C₄-Alkoxycarbonyl ist zum Beispiel Methoxycarbonyl, Ethoxycarbonyl oder Propoxycarbonyl. Methoxycarbonyl und Ethoxycarbonyl sind bevorzugt.

Di(C₁-C₄-alkyl)amino bedeutet zum Beispiel Dimethylamino, Diethylamino, Dipropylamino oder Dibutylamino.

C₁-C₂₀-Alkylamino, bevorzugt C₁-C₈-Alkylamino, insbesondere C₄-C₈-Alkylamino, ist beispielsweise Butylamino, Pentylamino, Hexylamino, Heptylamino oder Octylamino.

C₃-C₈-Cycloalkylamino ist zum Beispiel Cyclopropylamino, Cyclohexylamino oder Cyclooctylamino.

Alkylen mit bis zu 12 Kohlenstoffatomen bedeutet zum Beispiel Methylen, Dimethylen, Trimethylen, Butylen, Pentamethylen, Hexamethylen, Octamethylen, Decamethylen oder Dodecamethylen. Alkylen mit bis zu 8 Kohlenstoffatomen ist bevorzugt. Eine Zusammenfassung ist in US 5 155 152 enthalten.

Weitere mögliche zusätzlich verwendbare Additive sind Verbindungen der Formel a und b 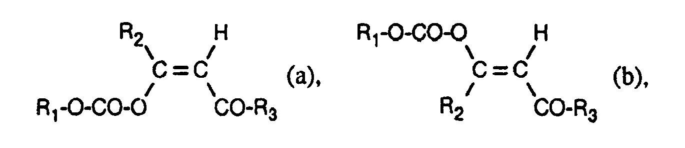 worin R¹ C₁-C₂₂-Alkyl, Phenyl, durch ein oder zwei C₁-C₉-Alkyl substituiertes Phenyl, C₅-C₇-Cycloalkyl oder eine Gruppe der Formeln A oder B ist 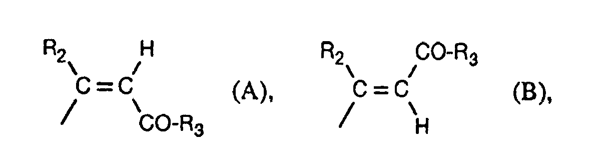 oder R¹ eine Gruppe der Formeln ca oder cb ist

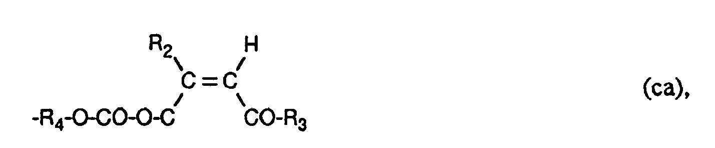

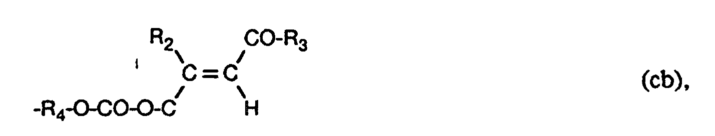

R² und R³ unabhängig voneinander C₁-C₂₀-Alkyl, Phenyl, durch ein oder zwei C₁-C₉-Alkyl substituiertes Phenyl oder C₅-C₇-Cycloalkyl sind und R⁴ C₂-C₁₂-Alkylen ist. Weiterführende Erläuterungen, Beispiele und Bevorzugungen sind der EP 224 438 zu entnehmen.

Weitere verwendbare Additive sind Triazole der Formel 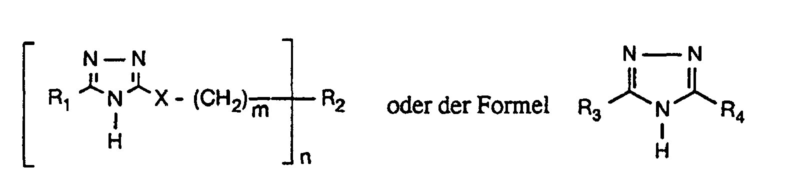 worin R₁ Wasserstoff, Hydroxy, C₁-C₆-Alkoxy, Carboxy, C₂-C₆-Alkoxycarbonyl, Merkapto, C₁-C₆-Alkylthio oder eine Gruppe -S-CH₂-COOH oder -S-CH₂-COO-Alkyl(C₁-C₆) bedeutet, X Thio, Methylen oder die Gruppe -COO- oder -S-CH₂-COO-, jeweils durch das Estersauerstoffatom an das Alkyl gebunden, ist, m eine ganze Zahl von 1 bis 20 ist, n 1 oder 2 ist, R₂, falls einwertig, Wasserstoff, Hydroxy oder Merkapto bedeutet und, falls zweiwertig eine direkte Bindung, Imino, C₁-C₆-Alkylimino, Oxy, Thio oder Methylen ist, R₃ Wasserstoff, Amino, Merkapto oder C₁-C₁₂-Alkylthio ist und, falls R₃ Wasserstoff bedeutet, R₄ Wasserstoff, -COOR₅, worin R₅ Wasserstoff, C₁-C₈-Alkyl oder -CH₂-COO-Alkyl(C₁-C₈) ist, oder -S-R₆, wobei R₆ Wasserstoff, C₁-C₁₂-Alkyl, -CH₂-COO-Alkyl(C₁-C₈) oder C₁-C₁₂-Alkylthio ist oder -NH-X'-NH- 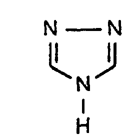 ist, worin X' für die Gruppe -CO-NH-Alkylen-NH-CO-, -CO-Alkylen-S-Alkylen-CO mit jeweils 1-12 C-Atomen in der Alkylenkette oder für (C₁-C₁₂)-Alkylen steht, falls R₃ NH₂ ist, R₄ C₁-C₄-Alkyl, Merkapto, C₁-C₄-Alkylthio oder -S-Alkylen-S- 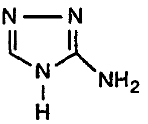 mit 1-12 C-Atomen in der Alkylenkette bedeutet, falls R₃ Merkapto ist, R₄ gegebenenfalls substituiertes Phenyl bedeutet, und falls R₃ C₁-C₁₂-Alkylthio ist, R₄ für C₁-C₄-Alkyl, C₁-C₁₂-Alkylthio oder für gegebenenfalls substituiertes Phenyl steht.

Solche Additive, weitere Ausführungsformen , Beispiele und Bevorzugungen sind aus der DE 30 48 659 ersichtlich.

Verwendbar sind auch Additivgemische bestehend aus a) einem Thioether der Formel (VIII) 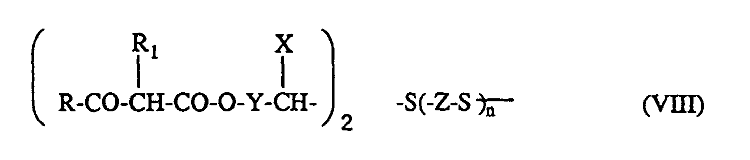 worin
- n: die Zahlen Null oder 1 bedeutet,
- R: C₁-C₁₈-Alkyl, C₅-C₈-Cycloalkyl, gegebenenfalls mit C₁-C₄-Alkyl substituiertes C₆-C₁₀-Aryl und
- R₁: Wasserstoff oder C₁-C₄-Alkyl sind,
- X: als wiederholt vorkommendes Symbol gleich oder verschieden Wasserstoff oder eine Gruppe der Formel 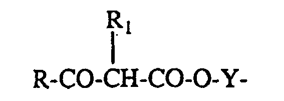
bedeutet,
- Y: als wiederholt vorkommendes Symbol gleich oder verschieden C₁-C₆-Alkylen oder eine Gruppe der Formel 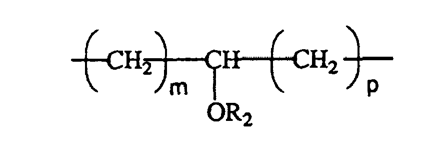 ist, wobei die (̵CH₂)̵ₘ Gruppe an das Sauerstoffatom gebunden ist und worin R₂ Wasserstoff oder eine Gruppe der Formel 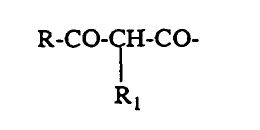 bedeutet, n die Zahlen 1 bis 4 und p die Zahlen Null bis 3 sein können, Z C₁-C₆-Alkylen oder eine Gruppe der Formel 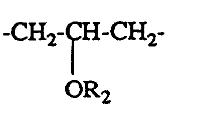 ist, und
b) einem ein Metall aus der Gruppe Zink, Calcium und Magnesium oder ferner auch Zink kombiniert mit mindestens einem der vorgenannten Metalle enthaltenden Stabilisator.

Weitere Ausführungen dazu, Beispiele und Bevorzugungen sind der EP 19 576 zu entnehmen.

Verwendbar sind auch Additive der Formel (IX) 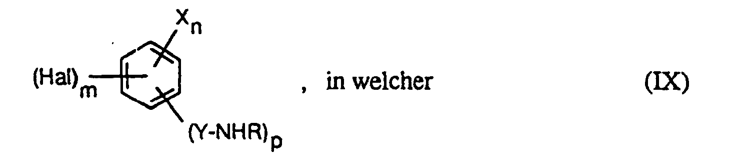
- m: eine Zahl 0, 1 oder 2,
- n: eine Zahl 0, 2 oder 3 und
- p: eine Zahl 1 oder 2 sind
- Hal: für -F, -Cl, -Br oder -I steht,
- X: -NH₂, -NHCH₃ und/oder -OCH₃ oder OC₂H₅,
- Y: -CO- oder -SO₂- und
- R: -H, -OH, -NH₂, unsubstituiertes oder beispielsweise durch eine bis drei HO- und/oder C₁-C₄-Alkoxy- oder Phenoxygruppen substituiertes C₁-C₁₈-Alkyl, Phenyl, Benzyl oder Phenäthyl, oder R ferner eine Gruppe der Formel 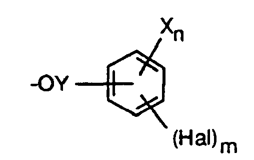
darstellt, wobei

X, Y, m, n und Hal die oben angegebene Bedeutung haben. Detaillierte Beschreibungen, Beispiele und Bevorzugungen sind der EP 122 228 und der EP 174 412 zu entnehmen.

Verwendbar sind auch Additivgemische erhältlich durch Mischen mindestens einer Verbindung der Formel (X)

[ROOC-CₙH₂ₙS-]₃ PX, (X)

in der X O oder S, n eine ganze Zahl von 1 bis 5 und R geradkettiges oder verzweigtes C₁-C₁₈-Alkyl oder substituiertes oder unsubstituiertes Cyclohexyl bedeuten, und mindestens eines Additivs vom Typ Me(II)-Carboxylat und/oder Me(II)-Phenolat, wobei Me(II) ein oder mehrere Metalle aus der Reihe Sr, Ca, Mg und Zn bedeutet, und wobei, bezogen auf das halogenhaltige Polymer, 0,01 - 2 Gew.-% der Verbindung der Formel X und 0,1-4 Gew.-% des Me(II)-Carboxylates und/oder Me(II)-Phenolates eingesetzt werden. Solche Stabilisatorgemische sind weiterführend in der EP 90 770 beschrieben, woraus auch Beispiele und Bevorzugungen ersichtlich sind.

Als Dihydropyridine kommen monomere und oligomere Verbindungen z.B. wie in EP-A-0 362 012, EP-A-0 286 887 und EP-A-0 024 754 beschrieben in Frage.

Als Antioxidantien kommen beispielsweise in Betracht:
1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol und Mischungen davon.
2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.
4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.
5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(a-methylbenzyl)-4-nonylphenol], 2,2'-Methylen-bis-[6-(a,a-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.
7. Hydroxvbenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis-(3,5-di-tert-butyi-4-hydroxybenzyl)-malonat, Di-[4-(1,1,3,3-tetramethylbutyl)-phenyl]-2,2-bis-(3,5-di-tert-butyl-4-hydroxybenzyl)-malonat.
8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
10. Phosphonate, Phosphite und Phosphonite z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters, Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearylsorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit, (C₉H₁₉-C₆H₄)_{1,5}-P-(O-C₁₂₋₁₃H₂₅₋₂₇)_{1,5}.
11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylengiycol, Diethylenglycol, Triethylenglycol, Pentaerythrit, Tris-(hydroxy)-ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxaisäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylprogionyl)-trimethylendiamin, N,N'-Bis-(3,5-di-tert-butyl-4-hydroxyphenylpropionyl)-hydrazin.
17. Ester der Thiodiessigsäure und Thiodipropionsäure

Bevorzugt sind Antioxidantien der Gruppen 5, 10 und 14 insbesondere 2,2-Bis-(4-hydroxyphenyl)-propan, Ester der 3,5-Di-tert-butyl-4-hydroxyphenylpropionsäure mit Octadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmässig 0,1 bis 10 und insbesondere 0,1 bis 5 Gew.-Teilen, bezogen auf 100 Gew.-Teile Polymer, angewendet werden.

Als UV-Absorber und Lichtschutzmittel kommen beispielsweise in Betracht:
1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlor-benztriazol, 2-(3'-sec-Butyl-5'-tert-butyl-2'-hydroxy, phenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)-phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)-phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'-hydroxy-phenyl]-benztriazol mit Polyethylenglycol 300; [R-CH₂CH₂-COO(CH₂)₃⁆₂ mit R = 3'-tert-Butyl-4'-hydroxy-5'-2H-benztriazol-2-yl-phenyl.
2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bemsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, sowie Chimassorb 966.
7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Als peroxidzerstörende Verbindungen kommen beispielsweise in Betracht:
Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat oder Ethylenglykolbismercaptoacetat.

Als Gleitmittel kommen beispielsweise in Betracht:
Montanwachs, Fettsäureester, PE-Wachse, Amidwachse, Polyolpartialester, teilverseifte PE-Wachse, sogenannte Komplexester Chlorparaffine, Glycerinester, Erdalkaliseifen oder Fettketone wie in DE 42 04 887 beschrieben. Verwendbare Gleitmittel sind auch in "Taschenbuch der Kunststoff-Additive", Herausgeber R. Gächter und H. Müller, Hanser Verlag, 3. Auflage, 1990, Seiten 443-503 beschrieben. Weitere Gleitmittelausführungen insbesondere Kombinationen sind zu entnehmen in EP 0 062 813 und EP 0 336 289.

Als Polyole kommen beispielsweise in Betracht:
Pentaerythrit, Dipentaerythrit, Tripentaerythrit, Trimethylolethan, Bistrimethylolethan, Trimethylolpropan, Bistrimethylolpropan, Sorbit, Mannit, Xylit, Lactose, Maltit, Malbit, Lactit, Palatinit, Isomaltit, Isomalt, Leukrose, Dihydroleukrose, Glucopyranosyl-sorbit, Glücopyranosyl-mannit, Lycasin, Tris-(hydroxyethyl)-isocyanurat, Tris-(dihydroxypropyl)-isocyanurat, Inosite, Tetramethylolcyclohexanol, Tetramethylolcyclopentanol, Tetramethylolcyclopyranol, Glycerin, Diglycerin, Polyglycerin, Thiodiglykol, Thiodiglycerin, Bishydroxyethylweinsäureamid, Hexakishydroxyethyl-melamin, Bis-trihydroxymethyloxamid, Tris-trihydroxymethylcitramid sowie α-, β- und γ-Cyclodextrine.

Die Polyole können in einer Menge von beispielsweise 0,01 bis 20, zweckmässig 0,1 bis 20 und insbesondere 0,1 bis 10 Gew.-Teilen, besonders bevorzugt 0,1 bis 3 Teile, bezogen auf 100 Gew.-Teile Polymer, angewendet werden.

Als Verbindungen aus der Reihe der Hydrotalcite, Zeolithe, Dawsonite, Magadiite, Kenyaite oder Kanemite kommen sowohl die natürlich vorkommenden Mineralien wie auch synthetisch hergestellte Verbindungen in Betracht.

Verbindungen aus der Reihe der Hydrotalcite können durch die allgemeine Formel (XIII),

M²⁺₁₋ₓ ·M³⁺ₓ ·(OH)₂ ·(Aⁿ⁻)_{x/n} · mH₂O (XIII)

wobei
- M²⁺: = Mg, Ca, Sr, Zn und/oder Sn ist,
- M³⁺: = AI, B oder Bi ist,
- Aⁿ⁻: ein Anion mit der Valenz n darstellt,
- n: eine Zahl von 1-4 ist,
- x: eine Zahl von 0-0,5 ist und
- m: eine Zahl von 0-20 ist,
beschrieben werden.

Aⁿ⁻ ist bevorzugt OH⁻, Cl⁻, Br⁻, I⁻, ClO₄⁻, HCO₃⁻, CH₃COO⁻, C₆H₅COO⁻, CO₃²⁻, SO₄²⁻, 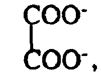 (CHOHCOO)₂²⁻, (CHOH)₄CH₂OHCOO⁻, C₂H₄(COO)₂²⁻, (CH₂COO)₂²⁻, CH₃CHOHCOO-, SiO₃²⁻, SiO₄⁴⁻, Fe(CN)₆³⁻, Fe(CN)₆⁴⁻, HPO₃²⁻ oder HPO₄²⁻.

Weitere Beispiele für Hydrotalcite finden sich in DE 41 06 403.

Andere Hydrotalcite, die zweckmässig eingesetzt werden können, sind Verbindungen mit der allgemeinen Formel (XIIIa), 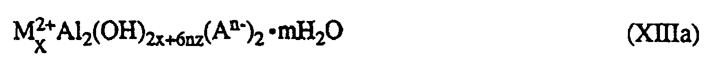 wobei in vorliegender Formel (XIIIa) M²⁺ wenigstens ein Metall aus der Reihe von Mg und Zn darstellt und Mg bevorzugt ist, Aⁿ⁻ ein Anion, beispielsweise aus der Reihe von CO₃²⁻, 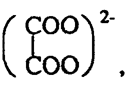 OH⁻ und S²⁻ darstellt, wobei n die Valenz des Anions ist, m eine positive Zahl, vorzugsweise von 0,5 bis 15, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel (XIII),

M²⁺₁₋ₓ·M³⁺ₓ·(OH)₂·(Aⁿ⁻)_{x/n}·mH₂O (XIII)

wobei M²⁺ die Bedeutung von Mg oder einer festen Lösung von Mg und Zn hat, Aⁿ⁻ für CO₃²⁻ steht, x eine Zahl von 0 bis 0,5 ist und m eine Zahl von 0 bis 20 ist.

Ganz besonders bevorzugt sind Hydrotalcite der Formeln

Al₂O₃·6MgO-CO₂·12H₂O,

Mg_{4,5}Al₂(OH)₁₃·CO₃·3,5H₂O,

4MgO·Al₂O₃·CO₂·9H₂O,

4MgO·Al₂O₃·CO₂·6H₂O,

ZnO·3MgO·Al₂O₃.CO₂·8-9H₂O oder

ZnO·3MgO·Al₂O₃·CO₂·5-6H₂O.

Zeolithe können durch die allgemeine Formel (XIV)

M_{x/n}[(AlO₂)ₓ(SiO₂)_{y}]·wH₂O (XIV)

wobei n die Ladung des Kations M,
M ein Element der ersten oder zweiten Hauptgruppe, sowie Zink,
y : x eine Zahl zwischen 0,8 und unendlich, vorzugsweise zwischen 0,8 und 10,5 und
w eine Zahl zwischen 0 und 300 ist,
beschrieben werden.

Weiter sind verwendbare Zeolithe aus "Atlas of Zeolite Structure Types", W.M. Meier und D.H. Olson, Verlag Butterworths, 3. Auflage 1992 bekannt.

Zu Zeolithen im weiteren Sinne sind auch Aluminiumphosphate mit Zeolithstiuktur zu rechnen.

Die bevorzugten an sich bekannten Zeolithe weisen einen durchschnittlichen wirksamen Porendurchmesser von 3-5 Å auf und können nach bekannten Methoden hergestellt werden. Besonders bevorzugt sind Zeolithe vom Typ NaA, die einen durchschnittlichen wirksamen Porendurchmesser von 4 Å besitzen, weshalb sie auch als Zeolithe 4A bezeichnet werden.

Besonders bevorzugt sind kristalline Natriumalumosilikate, deren Teilchengrösse wenigstens weitaus überwiegend im Bereich von 1-10 µ liegt.

In einer bevorzugten Ausführung können auch Natriumalumosilikate mit abgerundeten Ecken und Kanten verwendet werden.

Bevorzugt sind Verbindungen der Formeln

Na₁₂Al₁₂Si₁₂O₄₈ · 27 H₂O [Zeolith A],

Na₆Al₆Si₆O₂₄ · 2 NaX · 7,5 H₂O, X= OH, Halogen, ClO₄ [Sodalith]

Na₆Al₆Si₃O₇₂ · 24 H₂O,

Na₈Al₈Si₄₀O₉₆ · 24 H₂O,

Na₁₆Al₁₆Si₂₄O₈₀ · 16 H₂O,

Na₁₆Al₁₆Si₃₂O₉₆ · 16 H₂O,

Na₅₆Al₅₆Si₁₃₆O₃₈₄ · 250 H₂O, [Zeolith Y]

Na₈₆Al₈₆Si₁₀₆O₃₈₄ · 264 H₂O, [Zeolith X]

oder die durch teilweisen bzw. vollständigen Austausch der Na-Atome durch Li-, K-, Mg-, Ca-, Sr- oder Zn-Atome darstellbaren Zeolithe wie

(Na,K)₁₀Al₁₀Si₂₂O₆₄ · 20 H₂O,

Ca_{4,5}Na₃[(AlO₂)₁₂(SiO₂)₁₂] · 30 H₂O und

K₉Na₃[(AlO₂)₁₂(SiO₂)₁₂] · 27 H₂O.

Geeignete Dawsonite oder allgemeiner Alumosalzverbindungen beispielsweise der Formel (XV) {(Mt₂O)ₘ·(Al₂O₃)ₙ·Zₒ·pH₂O}, worin Mt H, Na, K, Li Mg_{1/2}, Ca_{1/2}, Sr_{1/2} oder Zn_{1/2}; Z CO₂, SO₂, (Cl₂O₇)_{1/2}, B₄O₆, S₂O₂ (Thiosulfat) oder C₂O₂ (Oxalat); m eine Zahl zwischen 1 und 3; n eine Zahl zwischen 1 und 4; o eine Zahl zwischen 2 und 4; und p eine Zahl zwischen 0 und 30 ist; können natürlich vorkommende Mineralien sein oder synthetisch hergestellte Verbindungen. Die Metalle können partiell gegeneinander ausgetauscht sein. Die genannten Dawsonite sind kristallin, teilkristallin oder amorph oder können als getrocknetes Gel vorliegen. Die Dawsonite können auch in selteneren, kristallinen Modifikationen vorliegen. Ein Verfahren zur Herstellung solcher Verbindungen ist in EP 0 394 670 angegeben. Beispiele für natürlich vorkommende Alumosalzverbindungen sind Indigirit, Tunisit, Alumohydrocalcit, Para-Alumohydrocalcit, Strontiodresserit und Hydro-Strontiodresserit. Weitere Beispiele für Alumosalz-Verbindungen sind Kaliumalumocarbonat {(K₂O)·(Al₂O₃)·(CO₂)₂·2H₂O}, Natriumalumothiosulfat {(Na₂O)·(Al₂O₃)·(S₂O₂)₂·2H₂O}, Kaliumalumosulfit {(K₂O)·(Al₂O₃)·(SO₂)₂·2H₂O}, Calciumalumooxalat {(CaO)·(Al₂O₃)·(C₂O₂)₂·5H₂O}, Magnesiumalumotetraborat {(MgO)·(Al₂O₃)·(B₄O₆)₂·5H₂O}, {([Mg_{0,2}Na_{0,6}]₂O)·(Al₂O₃)·(CO₂)₂·4,1H₂O}, {([Mg_{0,2}Na_{0,6}]₂O)·(Al₂O₃)·(CO₂)₂·4,3H₂O} und {([Mg_{0,3}Na_{0,4}]₂O)·(Al₂O₃)·(CO₂)_{2,2}·4,9H₂O}

Geeignet ist ein Magadiit der Formel Na₂Si₁₄O₂₉·n H₂O oder Na₂Si₈O₁₇·n H₂O, worin n eine Zahl 0-30 ist.

Geeignet ist ein Kenyait der Formel Na₂Si₂₂O₄₅·n H₂O, worin n eine Zahl 0-30 ist.

Geeignet ist ein Kanemit der Formel Na₂Si₂O₅·n H₂O, NaHSi₂O₅·n H₂O oder Na₂Si₄O₉·n H₂O, worin n eine Zahl 0-30 ist.

Die verwendbaren Magadiite, Kenyaite oder Kanemite können natürlich vorkommende Mineralien sein oder synthetisch hergestellte Verbindungen. Ein Verfahren zur Herstellung solcher Verbindungen findet sich beispielsweise in EP 0 472 144, EP 0 615 955, EP 0 615 956, EP 0 627 383 und DE 41 07 955.

Die gemischten Alumosalz-Verbindungen können nach an sich bekannten Verfahren durch Kationenaustausch, bevorzugt aus den Alkali-Alumosalz-Verbindungen oder durch Kombinationsfällung (siehe beispielsweise US 5,194,458) erhalten werden.

Bevorzugt sind Alumosalz-Verbindungen der Formel (XV),
worin Mt Na oder K; Z CO₂, SO₂ oder (Cl₂O₇)_{1/2}; m 1-3; n 1-4; o 2-4 und p 0-20 bedeuten. Besonders bevorzugt bedeutet Z CO₂.

Weiter sind Verbindungen bevorzugt, welche sich durch folgende Formeln darstellen lassen:

Mt₂O·Al₂O₃·(CO₂)₂ · pH₂O (XVa)

(Mt₂O)₂·(Al₂O₃)₂·(CO₂)₂ · pH₂O (XVb)

Mt₂O·(Al₂O₃)₂·(CO₂)₂ · pH₂O (XVc)

wobei Mt ein Metall wie Na, K, Mg_{1/2}, Ca_{1/2}, Sr_{1/2} oder Zn_{1/2} und p eine Zahl zwischen 0 und 12 bedeutet.

Weiterhin sind bevorzugt ein Magadiit der Formel Na₂Si₁₄O₂₉·6 H₂O und ein Kenyait der Formel Na₂Si₂₂O₄₅·7 H₂O

Die Verbindungen aus der Reihe der Hydrotalcite, Zeolithe, Dawsonite, Magadiite, Kenyaite oder Kanemite können in einer Menge von beispielsweise 0,01 bis 30, zweckmässig 0,1 bis 20 und insbesondere 0,1 bis 10 Gew.-Teilen, besonders bevorzugt 0,1 bis 5 Teile, bezogen auf 100 Gew.-Teile Polymer, angewendet werden.

Bevorzugt ist eine Zusammensetzung enthaltend
(a) PVC,
(b) ein Polyoxyalkylen der Formel

   R₁-O-[CH(R₃)-CH₂-O-]ₙ-[CH₂-[CH(OH)]ₚ-CH₂-O]_{q}-[C(O)]ᵣ-R₂ (I),

   wobei
   R₁ H, C₁-C₂₄-Alkyl, C₂-C₂₄-Alkenyl, CH₂=CH-C(O) oder CH₂=CCH₃-C(O),
   R₂ C₁-C₂₄-Alkyl, C₂-C₂₄-Alkenyl, CH-COOH
   R₃ H oder CH₃,
   n eine Zahl grösser oder gleich 2,
   p eine Zahl von 1 bis 6, und
   q und r, unabhängig voneinander, 0 oder 1 ist;
und (c) weniger 10 Teile je 100 Teile PVC eines anorganischen Salzes der Formel {M^{z+}ₐA^{(az/b)-}_{b}}, wobei
   M ein z-wertiges Alkalimetall-, Erdallcalimetall- oder Zinkkation,
   a und b, unabhängig voneinander, eine Zahl zwischen 1 und 6, und
   A ein Anion einer anorganischen Protonensäure oder einer organischen Sauerstoffsäure des Schwefels ist,
wobei die Zusammensetzung kein Ammoniumperchlorat enthält.

Besonders bevorzugt ist eine Zusammensetzung enthaltend als Komponente (a) Weich-PVC.

Besonders bevorzugt ist auch eine Zusammensetzung enthaltend als Komponente (b) einen Polyethylenglykollaurylester.

Bevorzugt ist ferner eine Zusammensetzung, die zusätzlich eine anorganische oder organische Zink-, Barium-, Blei-, Cadmium-, Aluminium-, Calcium-, Magnesium- oder Seltenerd-Verbindung oder ein Gemisch mindestens zweier dieser Verbindungen enthält.

Bevorzugt ist ferner eine Zusammensetzung, die zusätzlich eine Zinnverbindung enthält.

Bevorzugt ist ferner eine Zusammensetzung, die zusätzlich ein phenolisches Antioxidans, insbesondere 0,1 bis 5,0 Teile je 100 Teile Polymer, enthält.

Bevorzugt ist ferner eine Zusammensetzung, die zusätzlich ein 1,3-Diketon und/oder dessen Ba-, Mg-, Ca-, Al- oder Zn-Salz oder einen 1,3-Ketoester enthält.

Bevorzugt ist ferner eine Zusammensetzung, die zusätzlich ein Epoxid enthält.

Bevorzugt ist ferner eine Zusammensetzung, die zusätzlich ein monomeres, oligomeres oder polymeres Dihydropyridin enthält.

Bevorzugt ist ferner eine Zusammensetzung, die zusätzlich ein Phosphit, ein Polyol, einen Hydrotalcit, einen Zeolith, einen Dawsonit, einen Magadiit, einen Kenyait oder einen Kanemit enthält.

Besonders bevorzugt ist eine Zusammensetzung, die zusätzlich eine anorganische oder organische Zink-, Barium-, Cadmium-, Aluminium-, Calcium-, Magnesium- oder Seltenerd-Verbindung oder ein Gemisch mindestens zweier dieser Verbindungen, ein 1,3-Diketon und/oder dessen Ba-, Mg-, Ca-, Al- oder Zn-Salz oder einen 1,3-Ketoester und ein monomeres, oligomeres oder polymeres Dihydropyridin enthält.

Besonders bevorzugt ist eine Zusammensetzung, die zusätzlich eine anorganische oder organische Zink-, Barium-, Cadmium-, Aluminium-, Calcium-, Magnesium- oder Seltenerd-Verbindung oder ein Gemisch mindestens zweier dieser Verbindungen, ein 1,3-Diketon und/oder dessen Ba-, Mg-, Ca-, Al- oder Zn-Salz oder einen 1,3-Ketoester, ein monomeres, oligomeres oder polymeres Dihydropyridin und eine Zinnverbindung enthält.

Besonders bevorzugt ist ferner eine Zusammensetzung, die zusätzlich eine anorganische oder organische Zink-, Barium-, Cadmium-, Aluminium-, Calcium-, Magnesium- oder Seltenerd-Verbindung oder ein Gemisch mindestens zweier dieser Verbindungen, ein 1,3-Diketon und/oder dessen Ba-, Mg-, Ca-, Al- oder Zn-Salz oder einen 1,3-Ketoester , und ein Polyol, einen Hydrotalcit, einen Zeolith, einen Dawsonit, einen Magadüt, einen Kenyait oder einen Kanemit enthält.

Sämtliche Kombinationen können zusätzlich ein Gleitmittel enthalten.

Ein weiterer Gegenstand der vorliegenden Erfindung ist eine Additivmischung enthaltend ein Polyoxyalkylen der Formel

R₁-O-[CH(R₃)-CH₂-O-]ₙ-[CH₂-[CH(OH)]ₚ-CH₂-O]_{q}-[C(O)]ᵣ-R₂ (I),

wobei
R₁ H, C₁-C₂₄-Alkyl, C₂-C₂₄-Alkenyl, CH₂=CH-C(O) oder CH₂=CCH₃-C(O),
R₂ C₁-C₂₄-Alkyl, C₂-C₂₄-Alkenyl, CH₂-COOH, R₃ H oder CH₃,
n eine Zahl grösser oder gleich 2,
p eine Zahl von 1 bis 6, und
q und r, unabhängig voneinander, 0 oder 1 ist;
ein anorganisches Salz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist;
wobei die Mischung kein Ammoniumperchlorat enthält. Für die einzelnen Mischungsbestandteile gelten die vorstehend erläuterten Bevorzugungen, ebenso kann die Additivmischung die oben beschriebenen weiteren Bestandteile enthalten.

Ein weiterer Gegenstand der vorliegenden Erfindung ist die Verwendung eines Polyoxyalkylens der Formel

R₁-O-[CH(R₃)-CH₂-O-]ₙ-[CH₂-[CH(OH)]ₚ-CH₂-O]_{q}-[C(O)]ᵣ-R₂ (I),

wobei
R₁ H, C₁-C₂₄-Alkyl, C₂-C₂₄-Alkenyl, CH₂=CH-C(O)- oder CH₂=CCH₃-C(O)-,
R₂ C₁-C₂₄-Alkyl, C₂-C₂₄-Alkenyl, CH₂COOH
R₃ H oder CH₃,
n eine Zahl grösser oder gleich 2,
p eine Zahl von 1 bis 6, und
q und r, unabhängig voneinander, 0 oder 1 ist;
in Kombination mit einem anorganischen Salz der Formel {M^{z+}ₐA^{(az/b)-}_{b}}, wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist;
wobei kein Ammoniumperchlorat zugegen ist, zur Verbesserung der antistatischen Eigenschaft eines halogenhaltigen Polymers. Für die einzelnen Verbindungen sowie das halogenhaltige Polymer selber gelten die vorstehend erläuterten Bevorzugungen, ebenso kann zusätzlich einer der oben beschriebenen weiteren Bestandteile verwendet werden.

Die erfindungsgemässe Zusammensetzung kann auf an sich bekannte Weise hergestellt werden, wozu man unter Verwendung an sich bekannter Vorrichtungen, wie Kalander, Mischer, Kneter, Extruder und dergleichen, die genannten Additive und gegegbenenfalls weitere Zusätze mit dem halogenhaltigen Polymer oder Weich-Polymer vermischt. Die Additive können dabei einzeln oder in Mischung miteinander zugegeben werden. Es ist auch möglich sogenannte Masterbatches einzusetzen.

Das nach vorliegender Erfindung erhältliche antistatisch-ausgerüstete halogenhaltige Polymer kann auf bekannte Weisen in die gewünschte Form gebracht werden. Solche Verfahren sind beispielsweise Mahlen, Kalandrieren, Extrudieren, Spritzgiessen, Sintern, Press/Sintern oder Spinnen, ferner Extrusions-Blasen oder eine Verarbeitung nach dem Plastisol-Verfahren. Das antistatisch-ausgerüstete halogenhaltige Polymer kann auch zu Schaumstoffen verarbeitet werden.

Das erfindungsgemässe halogenhaltige Polymer eignet sich besonders für Halbhart- und Weich-Rezepturen, insbesondere in Form von Weichrezepturen für Drahtummantelungen, Kabelisolierungen, welche besonders bevorzugt ist. In Form von Halbhart-Rezepturen eignet sich das erfindungsgemässe halogenhaltige Polymer besonders für Dekorationsfolien, Schaumstoffe, Agrarfolien, Schläuche, Dichtungsprofile und Bürofolien.

In Form von Hart-Rezepturen eignet sich das erfindungsgemäss stabilisierte halogenhaltige Polymer besonders für Hohlkörper (Flaschen), Verpackungsfolien (Tiefziehfolien), Blasfoüen, Crash pad-Folien (Automobile), Rohre, Schaumstoffe, Schwerprofile (Fensterrahmen), Lichtwandprofile, Bauprofile, Sidings, Fittings, Bürofolien und Apparatur-Gehäuse (Computer, Haushaltsgeräte).

Beispiele für die Anwendung des erfindungsgemässen halogenhaltigen Polymers als Plastisol sind Kunstleder, Fussböden, Textilbeschichtungen, Tapeten, Coil-Coatings und Unterbodenschutz für Kraftfahrzeuge.

Beispiele für Sinter-Anwendungen des erfindungsgemäss stabilisierten halogenhaltigen Polymers sind Slush, Slush Mould und Coil-Coatings.

Die folgenden Beispiele erläutern die Erfindung weiter. Teile und Prozente beziehen sich, wie auch in der übrigen Beschreibung, auf das Gewicht, sofern nicht anders angegeben. Bei Angaben von Zahlenintervallen, wie auch in der übrigen Beschreibung, sind die Grenzwerte eingeschlossen.

### Beispiele 1-4:

Eine PVC-Zusammensetzung wird durch Vermischen der einzelnen Komponenten gemäss nachfolgender Tabelle 1 hergestellt (Mengenangaben in Gew.-Teilen).

Die Bestandteile werden während 10 Minuten auf einem Mischwalzwerk bei 180°C homogenisiert, so dass man einen 0,3-0,5 mm dicken Film erhält.

Die Bestimmung der Langzeitstabilität erfolgt nach DIN 53381, wobei das Probestück bei 190°C in einem Testofen während 25 Minuten gelagert wird und der Yellowness-Index gemäss ASTM D 1925-70 bestimmt wird (Test-1).

Die Bestimmung des Oberflächenwiderstandes erfolgt nach 24 stündiger Lagerung der Filme bei 23°C und Normalfeuchtigkeit von 50% rel. Feuchte gemäss DIN 53 482 (Test-3). Die verwendete Messspannung betrug 1000 V. Für die Bestimmungen ist der Mittelwert aus 10 Einzelbestimmungen angegeben.

Eine weitere Bestimmung der Langzeitstabilität und des Oberflächenwiderstandes erfolgt nach Tropenlagerung (4 Wochen bei 70°C und 95% rel. Feuchte) der Filme (Test-2 und Test-4). Die einzelnen Bestimmungen werden wie für Test-1 und Test-3 geschildert durchgeführt.

**Tabelle 1:**

| Komponente | V-1 | Bsp. 1 | Bsp. 2 | Bsp. 3 | Bsp. 4 |
|---|---|---|---|---|---|
| PVC-1 | 100 | 100 | 100 | 100 | 100 |
| W-1 | 48 | 44 | 44 | 44 | 44 |
| Gl-1 | 0,2 | 0,2 | 0,2 | 0,2 | 0,2 |
| ESO | 2 | 2 | 2 | 2 | 2 |
| ST-1 | 2 | 2 | 2 | 2 | 2 |
| B-1 | 4 | 4 | 4 | 4 | 4 |
| C-1 | -- | 0,2 | 0,4 | -- | -- |
| C-2 | -- | -- | -- | 0,1 | 0,4 |
| Test-1 | 9 | 7 | 7 | 8 | 8 YI |
| Test-2 | >100 | 40 | 27 | -- | -- YI |
| Test-3 | 94 | 10 | 5 | 20 | 6 [*] |
| Test-4 | 104 | 10 | 5 | 16 | 4 [*] |
| | | | | | * ·10⁹ Ohm |

### Beispiele 5 und 6:

Eine PVC-Zusammensetzung wird durch Vermischen der einzelnen Komponenten gemäss nachfolgender Tabelle 2 hergestellt (Mengenangaben in Gew.-Teilen). Die Probenherstellung und die Durchführung der Messungen erfolgen analog den Beispielen 1-4.

**Tabelle 2:**

| Komponente | V-2 | V-3 | Bsp. 5 | V-4 | Bsp. 6 |
|---|---|---|---|---|---|
| PVC-1 | -- | -- | -- | 100 | 100 |
| PVC-2 | 100 | 100 | 100 | -- | -- |
| W-1 | 15 | 3 | 11 | 28 | 24 |
| W-2 | 80 | 80 | 80 | -- | -- |
| ESO | -- | -- | -- | 3 | 3 |
| ST-2 | 2 | 2 | 2 | -- | -- |
| ST-3 | -- | -- | -- | 2,5 | 2,5 |
| B-1 | -- | 12 | 4 | -- | 4 |
| C-2 | -- | -- | 0,4 | -- | 0,4 |
| Test-3 | 110* | 0,31* | 0,29* | 14** | 0,37** |
| | *·10⁹ Ohm | | | **·10¹²Ohm | |

### Beispiele 7-16:

Eine PVC-Zusammensetzung wird durch Vermischen der folgenden Komponenten: 100 Teile PVC-1; 44 Teile W-1; 0,2 Teile G1-1; 2 Teile ESO und 2 Teile ST-1 analog den Beispielen 1-4 hergestellt.

Die Bestandteile, sowie jene gemäss Tabelle 3, werden während 10 Minuten auf einem Mischwalzwerk bei 180°C homogenisiert, so dass man einen 0,38 mm dicken Film erhält.

Die Bestimmung des Durchgangswiderstandes erfolgt nach mindestens 24 stündiger Lagerung der Filme bei 21,5°C und 50% relativer Luftfeuchte gemäss DIN 53 482. Hierzu wird eine kreisförmige Plattenelektrode (Durchmesser 50 mm) mit Schutzring (Durchmesserᵢₙₙₑₙ 60 mm; Durchmesserₐᵤₛₛₑₙ 80 mm) verwendet. Die Messung erfolgt bei einer Spannung von 100 Volt und der Strom wird nach einer Minute abgelesen. Aus diesen Werten wird der spezifische Durchgangswiderstand R_{D} berechnet.

Um den Einfluss von Feuchtigkeit zu testen werden die Folien sowohl bei 21,5°C und 50% relativer Luftfeuchte wie auch in einer Atmosphäre von trockenem Stickstoff gemessen. Die Messung erfolgt auf einer Quarzglasplatte mit dem Resistance Indicator Model 870 von Electrotech Systems mit leitenden Gummielektroden. Die Erhöhung des Widerstandes ist in Tabelle 3 als Trocknungsfaktor F = R(trocken)/R(50% rel. Feuchte) angegeben.

**Tabelle 3:**

| Bsp. | Komponenten | Rp | F |
|---|---|---|---|
| 7 | 3 % B-1 und 0,2 % C-1 | 5,0* | 1,50 |
| 8 | 3 % B-1 und 0,15 % C-2 | 7,4* | 1,53 |
| 9 | 3 % B-1 und 0,5 % C-3 | 4,1* | 1,67 |
| 10 | 3 % B-1 und 0,2 % C-4 | 6,2* | 2,10 |
| 11 | 3 % B-1 und 0,2 % C-5 | 11 * | 1,86 |
| 12 | 3 % B-2 und 0,2 % C-1 | 4,0* | 1,41 |
| 13 | 3 % B-2 und 0,2 % C-2 | 5,0* | 1,29 |
| 14 | 3 % B-2 und 0,5 % C-3 | 2,6* | 2,05 |
| 15 | 3 % B-2 und 0,2 % C-4 | 9,0* | 1,71 |
| 16 | 3 % B-2 und 0,2 % C-5 | 1,5* | 2,26 |
| | | *·10¹⁰Ohm·cm | |

### Beispiele V4, V5, 17 und 18

Eine PVC-Zusammensetzung wird durch Vermischen der in Tabelle 4 angegebenen Gewichtsteile gemäss Beispiel 1 hergestellt. Der Oberflächenwiderstand wird gemäss DIN 53 482 in Ohm gemessen.

**Tabelle 4**

| | V4 | V5 | Bsp. 17 | Bsp. 18 |
|---|---|---|---|---|
| PVC 1 | 100.0 | 100.00 | 100.00 | 100.00 |
| Kreide: OMYA EXH 1 | 133.00 | 133.00 | 133.00 | 133.00 |
| W 1 | 34.00 | 31.00 | 31.00 | 31.00 |
| St 4 | 3.30 | 3.30 | 3.30 | 3.30 |
| B 1 | | 3.30 | | |
| BC 1 | | | 2.90 | |
| BC 2 | | | | 3.30 |

Oberflächenwiderstand 1.03x10¹³ 4.39x10¹² 3.45x10¹¹ 8.91x10¹⁰ in Ohm

### Beispiele V6, V7, V8 19 bis 24

Eine PVC-Zusammensetzung wird durch Vermischen der in Tabelle 5 angegebenen Gewichtsteile gemäss Beispiel 1 hergestellt. Der Oberflächenwiderstand wird gemäss DIN 53 482 gemessen.

**Tabelle 5**

| | V6 | V7 | V8 | Bsp. 19 |
|---|---|---|---|---|
| PVC 1 | 100.0 | 100.00 | 100.00 | 100.00 |
| W-1 | 24.00 | 19.00 | 14.00 | 22.00 |
| Gl-1 | 1.26 | 1.26 | 1.26 | 1.26 |
| St-5 | 1.90 | 1.90 | 1.90 | 1.90 |
| ESO-1 | 2.60 | 2.60 | 2.60 | 2.60 |
| B 1 | | 5.16 | 10.32 | |
| BC 1 | | | | 2.70 |
| BC 2 | | | | |
| Oberflächenwiderstand in Ohm | 2.03x10¹³ | 7.84x10¹² | 1.96x10¹² | 3.16x10¹² |

| | Bsp. 20 | Bsp.21 | Bsp.22 | |
|---|---|---|---|---|
| PVC 1 | 100.0 | 100.00 | 100.00 | |
| W-1 | 19.00 | 16.00 | 22.00 | |
| GI-1 | 1.26 | 1.26 | 1.26 | |
| St-5 | 1.90 | 1.90 | 1.90 | |
| ESO-1 | 2.60 | 2.60 | 2.60 | |
| B1 | | | | |
| BC 1 | 5.50 | 8.40 | | |
| BC 2 | | | 2.70 | |
| Oberflächenwiderstand in Ohm | 1.36x10¹² | 3.86x10¹¹ | 2.52x10¹² | |

| | Bsp.23 | Bsp.24 | | |
|---|---|---|---|---|
| PVC 1 | 100.0 | 100.00 | | |
| W-1 | 19.00 | 16.00 | | |
| Gl-1 | 1.26 | 1.26 | | |
| St-5 | 1.90 | 1.90 | | |
| ESO-1 | 2.60 | 2.60 | | |
| B 1 | | | | |
| BC 1 | | | | |
| BC 2 | 5.50 | 8.40 | | |
| Oberilächenwiderstand in Ohm | 1.03x10¹² | 4.84x10¹¹ | | |

In obigen Beispielen werden folgende Substanzen eingesetzt:
PVC-1: Evipol SH 7020 (S-PVC, K-Wert 71)
PVC-2: E-PVC E 72 CF
W-1: Dioctylphthalat
W-2: Phosphatweichmacher (Reofos® 50; Ciba-Geigy AG; CH)
Gl-1: PE-Wachs
ESO: epoxidiertes Sojabohnenöl (Reoplast 38)
ESO-1: epoxidiertes Sojabohnenöl (Irgaplast 39)
ST-1: Ba/Zn-Stabilisator (BZ 561® ; Ciba-Geigy Additive; DE)
ST-2: Ba/Zn-Stabilisator (BZ 555® ; Ciba-Geigy Additive; DE)
ST-3: Ca/Zn-Stabilisator (CZ 400® ; Ciba-Geigy Additive; DE)
ST-4: Ba/Zn Stabilisator (BZ 508 ; Ciba-Geigy Additive; DE)
ST-5: Ba/Zn Stabilisator (BZ 591 ; Ciba-Geigy Additive; DE)
B-1: Polyethylenglykollaurylester (mittleres MG 460)
B-2: Polyethylenglykololeylether (Hauptkomponente Diethylenglykolmonooleylether) C-1: NaClO₄
C-2: KPF₆
C-3: LiCF₃SO₃
C-4.: KCF₃SO₃
C-5: LiClO₄
BC1: 8 %-ige Lösung KPF₆ in B1
BC2: 25%-ige Lösung NaClO₄ in B1

## Patentansprüche

1. Zusammensetzung, enthaltend
(a) ein halogenhaltiges Polymer,
(b) 0,1 bis 20 Gew.-Teile, bezogen auf 100 Gew.-Teile halogenhaltiges Polymer, eines Polyalkylens der Formel
R₁-O-[CH(R₃)-CH₂-O-]ₙ-[CH₂-[CH(OH)]ₚ-CH₂-O]_{q}-(C(O)]ᵣ-R₂ (I),
wobei
R₁ H, C₁-C₂₄-Alkyl, C₂-C₂₄-Alkenyl, CH₂CH-C(O) oder CH₂=CCH₃-C(O).
R₂ C₁-C₂₄-Alkyl, C₂-C₂₄-Alkenyl, oder CH₂-COOH,
R₃ H oder CH₃,
n eine Zahl grösser oder gleich 2,
p eine Zahl von 1 bis 6, und
q und r, unabhängig voneinander, 0 oder 1 ist;
und (c) ein anorganisches Salz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist;
wobei die Zusammensetzung kein Ammoniumperchlorat enthält.

2. Zusammensetzung gemäss Anspruch 1 enthaltend als Komponente (a) Weich-PVC.

3. Zusammensetzung gemäss Anspruch 1 enthaltend als Komponente (b) einen Polyethylenglykollaurylester.

4. Zusammensetzung gemäss Anspruch 1 enthaltend als anorganisches Salz (c) NaClO₄ oder KPF₆.

5. Zusammensetzung gemäss Anspruch 1, enthaltend zusätzlich eine anorganische oder organische Zink-. Barium-, Blei-. Cadmium-, Aluminium-. Calcium-, Magnesium- oder Seltenerd-Verbindung oder ein Gemisch mindestens zweier dieser Verbindungen.

6. Zusammensetzung gemäss Anspruch 1. enthaltend zusätzlich eine Zinnverbindung.

7. Zusammensetzung gemäss Anspruch 1, enthaltend zusätzlich ein phenolisches Antioxidans, insbesondere 0,1 bis 5.0 Teile je 100 Teile Polymer.

8. Zusammensetzung gemäss Anspruch 1, enthaltend zusätzlich ein 1,3-Diketon und/oder dessen Ba-, Mg-, Ca-, Al- oder Zn-Salz oder einen 1,3-Ketoester.

9. Zusammensetzung gemäss Anspruch 1, enthaltend zusätzlich ein Epoxid.

10. Zusammensetzung gemäss Anspruch 1, enthaltend zusätzlich ein monomeres, oligomeres oder polymeres Dihydropyridin.

11. Zusammensetzung gemäss Anspruch 1, enthaltend zusätzlich ein Phosphit, ein Polyol, einen Hydrotalcit, einen Zeolith, einen Dawsonit, einen Magadiit, einen Kenyait oder einen Kanemit.

12. Zusammensetzung gemäss Anspruch 1, enthaltend zusätzlich eine anorganische oder organische Zink-, Barium-, Cadmium-, Aluminium-, Calcium-, Magnesium- oder Seltenerd-Verbindung oder ein Gemisch mindestens zweier dieser Verbindungen, ein 1.3-Diketon und/oder dessen Ba-, Mg-, Ca-, Al- oder Zn-Salz oder einen 1,3-Ketoester und ein monomeres, oligomeres oder polymeres Dihydropyridin.

13. Zusammensetzung gemäss Anspruch 1, enthaltend zusätzlich eine anorganische oder organische Zink-. Barium-, Cadmium-, Aluminium-, Calcium-, Magnesium- oder Seltenerd-Verbindung oder ein Gemisch mindestens zweier dieser Verbindungen, ein 1,3-Diketon und/oder dessen Ba-, Mg-, Ca-, Al- oder Zn-Salz oder einen 1,3-Ketoester, ein monomeres, oligomeres oder polymeres Dihydropyridin und eine Zinnverbindung.

14. Zusammensetzung gemäss Anspruch 1, enthaltend zusätzlich eine anorganische oder organische Zink-, Barium-, Cadmium-, Aluminium-, Calcium-, Magnesium- oder Seltenerd-Verbindung oder ein Gemisch mindestens zweier dieser Verbindungen, ein 1,3-Diketon und/oder dessen Ba-, Mg-, Ca-, Al- oder Zn-Salz oder einen 1,3-Ketoester und ein Polyol, einen Hydrotalcit, einen Zeolith, einen Dawsonit, einen Magadiit, einen Kenyait oder einen Kanemit.

15. Additivmischung enthaltend
ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I),
wobei
R₁ H, C₁-C₂₄-Alkyl, C₂-C₂₄-Alkenyl, CH₂=CH-C(O)- oder CH₂=CCH₃-C(O)-,
R₂ C₁-C₁₄-Alkyl, C₂-C₂₄-Alkenyl, oder CH₂-COOH,
R₃ H oder CH₃,
n eine Zahl grösser oder gleich 2.
p eine Zahl von 1 bis 6, und
q und r, unabhängig voneinander, 0 oder 1 ist;
und ein anorganisches Salz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist;
wobei die Mischung kein Ammoniumperchlorat enthält.

16. Verwendung einer Additivmischung, enthaltend
ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I),
wobei
R₁ H. C₁-C₂₄-Alkyl, C₂-C₂₄-Alkenyl, CH₂=CH-C(O)- oder CH₂=CCH₃-C(O)-,
R₂ C₁-C₂₄-Alkyl, C₂-C₂₄-Alkenyl, oder CH₂-COOH,
R₃ H oder CH₃,
n eine Zahl grösser oder gleich 2.
p eine Zahl von 1 bis 6, und
q und r, unabhängig voneinander, 0 oder 1 ist;
und ein anorganisches Salz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen
Sauerslottsäure des Schwefels ist;
wobei die Mischung kein Ammoniumperchlorat enthält;
zur Verbesserung der antistatischen Eigenschaft von einem halogenhaltigen Polymer.

17. Verfahren zur Herstellung von einem antistatisch-ausgerüsteten halogenhaltigen Polymer, **dadurch gekennzeichnet, dass** man unter Verwendung von Vorrichtungen, wie Kalander, Mischer, Kneter, Extruder und dergleichen, eine Additivmischung enthaltend ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I),
wobei
R₁ H. C₁-C₂₄-Alkyl, C₂-C₂₄-Alkenyl, CH₂=CH-C(O)- oder CH₂=CCH₃-C(O)-,
R₂ C₁-C₂₄-Alkyl, C₂-C₂₄-Alkenyl, oder CH₂-COOH,
R₃ H oder CH₃,
n eine Zahl grösser oder gleich 2,
p eine Zahl von 1 bis 6, und
q und r, unabhängig voneinander, 0 oder 1 ist;
und ein anorganisches Satz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen
Sauerstoffsäure des Schwefels ist;
wobei die Zusammensetzung kein Ammoniumperchlorat enthält;
als solche oder in Form ihrer einzelnen Bestandteile und gegebenenfalls weiterer Zusätze mit einem halogenhaltigen Polymer vermischt.

## Claims

1. A composition consisting of
(a) a halogen-containing polymer;
(b) 0,1 to 20 parts by weight based on 100 parts per weight of a halogen-containing polymer, of a polyoxyalkylene of the formula
R₁-O-[CH(R₃)-CH₂-O-]ₙ -[CH₂-[CH(OH)]ₚ-CH₂-O]_{q}-[C(O)]ᵣ-R₂,
where
R₁ is hydrogen, C₁ to C₂₄ alkyl, C₂ to C₂₄ alkenyl, CH₂.=CH-C(O) or CH₂=CCH₃-C(O);
R₂ is C₁ to C₂₄ alkyl, C₂ to C₂₄ alkenyl or CH₂-COOH;
R₃ is hydrogen or methyl;
n is a number equal to or greater than 2;
p is a number from 1 to 6; and
q and r, independently of one another, are 0 or 1;
and
(c) an inorganic salt of the formula {M^{z+}ₐ A^{(az/b)-}_{b}}, where
M is a z-valent alkali metal cation, alkaline earth metal cation or a zinc cation;
a and b, independently of one another, are a number from 1 to 6;
and A is an anion of an inorganic proton acid or an organic oxo acid of sulfur;
with the proviso that no ammonium perchlorate is present.

2. A composition according to claim 1, wherein component (a) is flexible PVC.

3. A composition according to claim 1, wherein component (b) is a polyethylene glycol lauryl ester.

4. A composition according to claim 1, wherein the inorganic salt (c) is NaClO₄ or KPF₆.

5. A composition according to claim 1, which additionally comprises an inorganic or organic zinc, barium, lead, cadmium, aluminium, calcium, magnesium or rare-earth compound or a mixture of at least two of these compounds.

6. A composition according to claim 1, which additionally comprises a tin compound.

7. A composition according to claim 1, which additionally comprises a phenolic antioxidant, in particular from 0.1 to 5.0 parts per 100 parts of polymer.

8. A composition according to claim 1, which additionally comprises a 1,3-diketone and/or a barium, magnesium, calcium, aluminium or zinc salt thereof, or a 1,3-keto ester.

9. A composition according to claim 1, which additionally comprises an epoxide.

10. A composition according to claim 1, which additionally comprises a monomeric, oligomeric or polymeric dihydropyridine.

11. A composition according to claim 1, which additionally comprises a phosphite, a polyol, a hydrotalcite, a zeolite, a dawsonite, a magadiite, a kenyaite or a kanemite.

12. A composition according to claim 1, which additionally comprises an inorganic or organic zinc, barium, cadmium, aluminium, calcium, magnesium or rare-earth compound or a mixture of at least two of these compounds, a 1,3-diketone and/or a barium, magnesium, calcium, aluminium or zinc salt thereof, or a 1,3-keto ester and a monomeric, oligomeric or polymeric dihydropyridine.

13. A composition according to claim 1, which additionally comprises an inorganic or organic zinc, barium, cadmium, aluminium, calcium, magnesium or rare-earth compound or a mixture of at least two of these compounds, a 1,3-diketone and/or a barium, magnesium, calcium, aluminium or zinc salt thereof, or a 1,3-keto ester, a monomeric, oligomeric or polymeric dihydropyridine and a tin compound.

14. A composition according to claim 1, which additionally comprises an inorganic or organic zinc, barium, cadmium, aluminium, calcium, magnesium or rare-earth compound or a mixture of at least two of these compounds, a 1,3-diketone and/or a barium, magnesium, calcium, aluminium or zinc salt thereof, or a 1,3-keto ester and a polyol, a hydrotalcite, a zeolite, a dawsonite, a magadiite, a kenyaite or a kanemite.

15. Additiv mixture comprising a polyoxyalkylene of the formula
R₁-O-[CH(R₃)-CH₂-O-]ₙ -[CH₂-[CH(OH)]ₚ-CH₂-O]_{q}[C(O)]ᵣ-R₂,
where
R₁ is hydrogen, C₁ to C₂₄ alkyl, C₂ to C₂₄ alkenyl, CH₂.=CH-C(O) or CH₂=CCH₃-C(O);
R₂ is C₁ to C₂₄ alkyl, C₂ to C₂₄ alkenyl or CH₂-COOH;
R₃ is hydrogen or methyl;
n is a number equal to or greater than 2;
p is a number from 1 to 6; and
q and r, independently of one another, are 0 or 1;
and an inorganic salt of the formula {M^{z+}ₐ A^{(az/b)-}_{b}}, where
M is a z-valent alkali metal cation, alkaline earth metal cation or a zinc cation;
a and b, independently of one another, are a number from 1 to 6;
and A is an anion of an inorganic proton acid or an organic oxo acid of sulfur;
with the proviso that no ammonium perchlorate is present.

16. Use of an additive mixture comprising a polyoxyalkylene of the formula
R₁-O-[CH(R₃)-CH₂-O-]ₙ -[CH₂-[CH(OH)]ₚ-CH₂-O]_{q}-[C(O)]ᵣ-R₂,
where
R₁ is hydrogen, C₁ to C₂₄ alkyl, C₂ to C₂₄ alkenyl, CH₂.=CH-C(O) or CH₂=CCH₃-C(O);
R₂ is C₁ to C₂₄ alkyl, C₂ to C₂₄ alkenyl or CH₂-COOH;
R₃ is hydrogen or methyl;
n is a number equal to or greater than 2;
p is a number from 1 to 6; and
q and r, independently of one another, are 0 or 1;
and an inorganic salt of the formula {M^{z+}ₐ A^{(az/b)-}_{b}}, where
M is a z-valent alkali metal cation, alkaline earth metal cation or a zinc cation;
a and b, independently of one another, are a number from 1 to 6;
and A is an anion of an inorganic proton acid or an organic oxo acid of sulfur;
with the proviso that no ammonium perchlorate is present; for improving the antistatic properties of a halogen-containing polymer.

17. Process for the manufacturing of a antistatic equipped halogen-containing polymer, **characterized by** mixing in an equipment like calender, a mixer, a compounder or an extruder or the like, an additive mixture comprising a polyoxyalkylene of the formula
R₁-O-[CH(R₃)-CH₂-O-]ₙ -[CH₂-[CH(OH)]ₚ-CH₂-O]_{q}-[C(O)]ᵣ-R₂,
where
R₁ is hydrogen, C₁ to C₂₄ alkyl, C₂ to C₂₄ alkenyl, CH_{2·}=CH-C(O) or CH₂=CCH₃-C(O);
R₂ is C₁ to C₂₄ alkyl, C₂ to C₂₄ alkenyl or CH₂-COOH;
R₃ is hydrogen or methyl;
n is a number equal to or greater than 2;
p is a number from 1 to 6; and
q and r, independently of one another, are 0 or 1;
and an inorganic salt of the formula {M^{z+}ₐ A^{(az/b)-}_{b}}, where
M is a z-valent alkali metal cation, alkaline earth metal cation or a zinc cation;
a and b, independently of one another, are a number from 1 to 6;
and A is an anion of an inorganic proton acid or an organic oxo acid of sulfur;
with the proviso that no ammonium perchlorate is present;
as such or in form of the sole constituents and where appropriate with further additives
with a halogen-containing polymer.

## Revendications

1. Composition contenant
(a) un polymère halogéné,
(b) de 0,1 à 20 parties en poids, par rapport à 100 parties en poids de polymère halogéné, d'un polyalkylène de formule
R₁-O-[CH (R₃)-CH₂-O-]ₙ-[CH₂-[CH(OH)]ₚ-CH₂-O]_{q}-[C(O)]ᵣ-R₂ (I),
dans laquelle
R₁ représente un H, un alkyle en C₁-C₂₄, un alcényle en C₂-C₂₄, un CH₂=CH-C(O) ou un CH₂=CCH₃-C(O),
R₂ représente un alkyle en C₁-C₂₄, un alcényle en C₂-C₂₄ ou un CH₂-COOH,
R₃ représente un H ou un CH₃,
n représente un nombre supérieur ou égal à 2,
p représente un nombre de 1 à 6, et
q et r, indépendamment l'un de l'autre, valent 0 ou 1 ;
et (c) un sel inorganique de formule {M^{z+}ₐA^{(az/b)-}_{b}} dans laquelle
M représente un cation de métal alcalin, de métal alcalino-terreux ou de zinc de valence z,
a et b, indépendamment l'un de l'autre, représentent un nombre compris entre 1 et 6, et
A représente un anion d'un acide protonique inorganique ou d'un acide oxygéné inorganique du soufre ;
où la composition ne contient pas de perchlorate d'ammonium.

2. Composition selon la revendication 1, contenant du PVC mou en tant que composant (a).

3. Composition selon la revendication 1, contenant un ester laurylique de polyéthylèneglycol en tant que composant (b).

4. Composition selon la revendication 1, contenant du NaClO₄ ou du KPF₆ en tant que sel inorganique (c).

5. Composition selon la revendication 1, contenant en outre un composé inorganique ou organique du zinc, du baryum, du plomb, du cadmium, de l'aluminium, du calcium, du magnésium ou de terre rare ou un mélange d'au moins deux de ces composés.

6. Composition selon la revendication 1, contenant en outre un composé de l'étain.

7. Composition selon la revendication 1, contenant en outre un antioxydant phénolique, en particulier de 0,1 à 5,0 parties pour 100 parties de polymère.

8. Composition selon la revendication 1, contenant en outre une 1,3-dicétone et/ou son sel de Ba, de Mg, de Ca, de A1 ou de Zn ou 1,3-cétoester.

9. Composition selon la revendication 1, contenant en outre un époxide.

10. Composition selon la revendication 1, contenant en outre une dihydropyridine monomère, oligomère ou polymère.

11. Composition selon la revendication 1, contenant en outre un phosphite, un polyol, une hydrotalcite, une zéolithe, une dawsonite, une magadiite, une kenyaïte ou une kanémite.

12. Composition selon la revendication 1, contenant en outre un composé inorganique ou organique du zinc, du baryum, du cadmium, de l'aluminium, du calcium, du magnésium ou de terre rare ou un mélange d'au moins deux de ces composés, une 1,3-dicétone et/ou son sel de Ba, de Mg, de Ca, de Al ou de Zn ou un 1,3-cétoester, et une dihydropyridine monomère, oligomère ou polymère.

13. Composition selon la revendication 1, contenant en outre un composé inorganique ou organique du zinc, du baryum, du cadmium, de l'aluminium, du calcium, du magnésium ou de terre rare ou un mélange d'au moins deux de ces composés, une 1,3-dicétone et/ou son sel de Ba, de Mg, de Ca, de Al ou de Zn ou un 1,3-cétoester, une dihydropyridine monomère, oligomère ou polymère et un composé de l'étain.

14. Composition selon la revendication 1, contenant en outre un composé inorganique ou organique du zinc, du baryum, du cadmium, de l'aluminium, du calcium, du magnésium ou de terre rare ou un mélange d'au moins deux de ces composés, une 1,3-dicétone et/ou son sel de Ba, de Mg, de Ca, de Al ou de Zn ou un 1,3-cétoester, et un polyol, une hydrotalcite, une zéolithe, une dawsonite, une magadiite, une kenyaïte ou une kanémite.

15. Mélange d'additifs contenant un polyalkylène de formule
R₁-O-[CH(R₃)-CH₂-O-]ₙ-[CH₂-[CH(OH)]ₚ-CH₂-O]_{q}-[C(O)]ᵣ-R₂ (I),
dans laquelle
R₁ représente un H, un alkyle en C₁-C₂₄, un alcényle en C₂-C₂₄, un CH₂=CH-C(O) ou un CH₂=CCH₃-C(O),
R₂ représente un alkyle en C₁-C₂₄, un alcényle en C₂-C₂₄ ou un CH₂-COOH,
R₃ représente un H ou un CH₃,
n représente un nombre supérieur ou égal à 2,
p représente un nombre de 1 à 6, et
q et r, indépendamment l'un de l'autre, valent 0 ou 1 ;
et un sel inorganique de formule {M^{z+}ₐA^{(az/b)-}_{b}} dans laquelle
M représente un cation de métal alcalin, de métal alcalino-terreux ou de zinc de valence z,
a et b, indépendamment l'un de l'autre, représente un nombre compris entre 1 et 6, et
A représente un anion d'un acide protonique inorganique ou d'un acide oxygéné inorganique du soufre ;
où la composition ne contient pas de perchlorate d'ammonium.

16. Utilisation d'un mélange d'additifs contenant un polyalkylène de formule
R₁-O-[CH(R₃)-CH₂-O-]ₙ-[CH₂-[CH(OH)]ₚ-CH₂-O]_{q}-[C(O)]ᵣ-R₂ (I),
dans laquelle
R₁ représente un H, un alkyle en C₁-C₂₄, un alcényle en C₂-C₂₄, un CH₂=CH-C(O) ou un CH₂=CCH₃-C(O),
R₂ représente un alkyle en C₁-C₂₄, un alcényle en C₂-C₂₄ ou un CH₂-COOH,
R₃ représente un H ou un CH₃,
n représente un nombre supérieur ou égal à 2,
p représente un nombre de 1 à 6, et
q et r, indépendamment l'un de l'autre, valent 0 ou 1 ;
et un sel inorganique de formule {M^{z+}ₐA^{(az/b)-}_{b}} dans laquelle
M représente un cation de métal alcalin, de métal alcalino-terreux ou de zinc de valence z,
a et b, indépendamment l'un de l'autre, représente un nombre compris entre 1 et 6, et
A représente un anion d'un acide protonique inorganique ou d'un acide oxygéné inorganique du soufre ;
où la composition ne contient pas de perchlorate d'ammonium ;
pour améliorer la propriété antistatique d'un polymère halogéné.

17. Procédé de préparation d'un polymère halogéné à apprêt antistatique, **caractérisé en ce qu'**en utilisant des dispositifs tels qu'une calandre, un mélangeur, un malaxeur, une extrudeuse et similaires, un mélange d'additifs contenant un polyalkylène de formule
R₁-O-[CH(R₃)-CH₂-O-]ₙ-[CH₂-[CH(OH)]ₚ-CH₂-O]_{q}-[C(O)]ᵣ-R₂ (I),
dans laquelle
R₁ représente un H, un alkyle en C₁-C₂₄, un alcényle en C₂-C₂₄, un CH₂=CH-C(O) ou un CH₂=CCH₃-C(O),
R₂ représente un alkyle en C₁-C₂₄, un alcényle en C₂-C₂₄ ou un CH₂-COOH,
R₃ représente un H ou un CH₃,
n représente un nombre supérieur ou égal à 2,
p représente un nombre de 1 à 6, et
q et r, indépendamment l'un de l'autre, valent 0 ou 1 ;
et un sel inorganique de formule {M^{z+}ₐA^{(az/b)-}_{b}} dans laquelle
M représente un cation de métal alcalin, de métal alcalino-terreux ou de zinc de valence z,
a et b, indépendamment l'un de l'autre, représente un nombre compris entre 1 et 6, et
A représente un anion d'un acide protonique inorganique ou d'un acide oxygéné inorganique du soufre ;
où la composition ne contient pas de perchlorate d'ammonium,
en tant que tel ou sous forme de ses constitutants individuels et éventuellement des adjuvants supplémentaires sont mélangés avec un polymère
